# EUROPEAN PATENT SPECIFICATION

(11) **EP 4 184 964 B1**
(45) Date of publication and mention of the grant of the patent: **24.09.2025**
(21) Application number: 21842433.1
(22) Date of filing: 05.06.2021
(51) Int. Cl.: H04W 4/40, H04W 72/25, H04W 92/18

(54) **RESOURCE SCHEDULING METHOD, COMMUNICATION APPARATUS AND SYSTEM**
RESSOURCENPLANUNGSVERFAHREN, KOMMUNIKATIONSVORRICHTUNG UND SYSTEM
PROCÉDÉ DE PLANIFICATION DE RESSOURCES, APPAREIL ET SYSTÈME DE COMMUNICATION

(30) Priority: 17.07.2020 CN 202010701498
(43) Date of publication of application: 24.05.2023
(73) Proprietor: Huawei Technologies Co., Ltd., Shenzhen, Guangdong 518129 (CN)
(72) Inventor: FAN, Qiang, Shenzhen, Guangdong 518129 (CN); YOU, Chunhua, Shenzhen, Guangdong 518129 (CN)
(74) Representative: Gill Jennings & Every LLP
(86) International application number: PCT/CN2021/098489
(87) International publication number: WO 2022/012212

(56) References cited:
- EP-A1- 3 627 933
- WO-A1-2016/181095
- CN-A- 110 366 260
- CN-A- 110 622 618
- CN-A- 111 107 583
- CN-A- 111 385 760
- US-A1- 2020 137 619
- US-A1- 2020 196 387
- HUAWEI, HISILICON: "Discussion on sidelink resource allocation and configuration", 3GPP DRAFT; R1-1712135, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20170821 - 20170825, 20 August 2017 (2017-08-20), Mobile Competence Centre ; 650, route des Lucioles ; F-06921 Sophia-Antipolis Cedex ; France , XP051314955

## Description

This application claims priority to Chinese Patent Application No. 202010701498.X, filed with the China National Intellectual Property Administration on July 17, 2020 and entitled "RESOURCE SCHEDULING METHOD, AND COMMUNICATION APPARATUS AND SYSTEM".

### TECHNICAL FIELD

This application relates to the field of communication technologies, and in particular, to a resource scheduling method, and a communication apparatus and system.

### BACKGROUND

Vehicle to everything (vehicle to everything, V2X) provides vehicle information by using a sensor, a vehicle-mounted terminal device, and the like that are mounted on a vehicle, and implements mutual communication between vehicles, between a vehicle and a communication network infrastructure, and between a vehicle and a network by using a communication technology. To resolve a problem that a communication distance is limited because an insufficient hardware capability of a UE on a transmitting side is not strong enough during communication between user equipments (user equipments, UEs) in a V2X communication architecture, and a problem that communication between a remote UE and a network device is blocked due to a limited network coverage range of the network device, a relay device is usually used in the V2X communication architecture to forward data sent by the UE on the transmitting side.

After receiving the data sent by the UE on the transmitting side, the relay device requests a resource to forward the data. This causes a long delay. To overcome the problem, a pre-emptive buffer status report (pre-emptive buffer status report, pre-emptive BSR) mechanism is introduced in NR R16 to resolve the problem. To be specific, the user equipment may send a pre-emptive BSR to indicate a data volume of to-be-transmitted data, to request a transmission resource in advance. This reduces a relay forwarding delay. However, in the V2X communication architecture, the UE cannot indicate the data volume of the to-be-transmitted data to a relay UE (a UE with a relay function) through a PC5 communication interface. Therefore, the relay UE cannot obtain the transmission resource in advance to transmit the to-be-transmitted data. In addition, a transmission resource obtained by the relay UE by using the pre-emptive BSR is a Uu transmission resource. However, in a sidelink communication scenario between UEs, the relay UE can forward a to-be-transmitted resource of the UE only by using a sidelink transmission resource.

It can be learned that, in the sidelink communication scenario, a problem of a long relay forwarding delay still exists, and how to reduce the relay forwarding delay in the sidelink communication scenario is an urgent problem to be resolved.

US 2020/0196387 A1 describes a method for enabling a wireless device to act as a relay in device-to-device (D2D) communications by using sidelink channels and control signaling to coordinate data transmission timing.

WO 2016/181095 A1 outlines a system for efficiently allocating radio resources between user devices in D2D communication, aiming to reduce interference and signaling overhead through preconfigured resource patterns and coordination.

EP 3 627 933 B1 proposes a communication method where a terminal selects transmission resources based on reference signals from a base station to enhance synchronization and reduce interference in wireless networks.

### SUMMARY

This application provides a resource scheduling method, and a communication apparatus and system, to help a relay device obtain a transmission resource in advance based on to-be-received data volume information, so that a relay forwarding delay in a sidelink communication scenario is reduced.

According to a first aspect, this application provides a resource scheduling method. The method may be applied to a first terminal device or a component (a chip, a processor, or the like) of a first terminal device. For example, the method is applied to the first terminal device, and the method includes: A first terminal device sends indication information to a second device, where the indication information includes data volume information of to-be-transmitted data on a sidelink, the data volume information of the to-be-transmitted data is used by the second device to obtain a target resource, and the target resource is used by the second device to forward, to a third communication device, data received by the second device from the sidelink. There is a sidelink between the first terminal device and the second device, and there is a connection between the second device and the third communication device.

Based on the method described in the first aspect, the first terminal device sends the indication information to the second device, and the second device may obtain, in advance based on the data volume information that is of the to-be-transmitted data on the sidelink and that is included in the indication information, the target resource for transmitting the to-be-transmitted data, to reduce a delay in forwarding, by the second device, the to-be-transmitted data sent by the first terminal device.

In a possible implementation, before sending the indication information to the second device, the first terminal device may further receive a first configuration message, and determine, based on the first configuration message, to send the indication information to the second device. By implementing the possible implementation, after obtaining the first configuration message, the first terminal device may configure (or activate), based on the first configuration message, a function of sending the indication information by the first terminal device, so that the second device obtains the target resource in advance based on the data volume information of the to-be-transmitted data in the indication information.

In a possible implementation, the first configuration message includes one or more of a correspondence between a logical channel LCH and a logical channel group LCG, an LCH identifier, a bearer identifier, an LCG identifier, a data volume threshold, and timer duration. By implementing the possible implementation, after receiving the first configuration message, the first terminal device may configure (or activate), based on specific content in the first configuration message, the function of sending the indication information by the first terminal device, and determine content included in the indication information, so that the second device accurately obtains the target resource in advance based on the specific content in the indication information.

In a possible implementation, a specific implementation in which the first terminal device receives the first configuration message is as follows: The first terminal device receives the first configuration message sent by the third communication device. By implementing the possible implementation, when the third communication device is a network device, and the first terminal device is in a network coverage area of the third communication device, the third communication device may directly send the first configuration message to the first terminal device, to improve configuration efficiency of the first terminal device.

In a possible implementation, after receiving the first configuration message, the first terminal device may further determine a second configuration message based on the first configuration message, and send the second configuration message to the second device. The second configuration message includes one or more of the correspondence between the LCH and the LCG, the LCH identifier, the bearer identifier, the LCG identifier, the data volume threshold, and the timer duration. By implementing the possible implementation, it can be ensured that the first terminal device and the second device reach a consensus on the content of the indication information, and consistency of function cognition of the indication information is maintained.

In a possible implementation, a specific implementation in which the first terminal device receives the first configuration message is as follows: The first terminal device receives the first configuration message sent by the second device. By implementing the possible implementation, when the third communication device is a network device, and the first terminal device is not in a network coverage area of the third communication device, the second device may forward the first configuration message to the first terminal device, to ensure that the first terminal device can still configure (or activate), based on the first configuration message, the function of sending the indication information by the first terminal device. Alternatively, when the third communication device cannot send the first configuration message to the first terminal device, the second device may send the first configuration message to the first terminal device, to ensure that the first terminal device can configure (or activate), based on the first configuration message, the function of sending the indication information by the first terminal device. Alternatively, when the third communication device is a remote device, the first configuration message received by the first terminal device comes from the second device. In other words, the first configuration message may be determined by the second device based on a mapping relationship between sidelink logical channels, to ensure that the first terminal device can configure (or activate), based on the first configuration message, a function of sending, by the first terminal device, the indication information to a relay device through a PC5 communication interface on the sidelink.

In a possible implementation, before receiving the first configuration message sent by the second device, the first terminal device may further send a mapping relationship between LCHs and/or quality of service information of the LCH to the second device, where the mapping relationship between the LCHs and/or the quality of service information of the LCH are/is used by the second device to determine the first configuration message. By implementing the possible implementation, when the third communication device cannot send the first configuration message to the first terminal device, the second device may determine the first configuration message based on the mapping relationship between the LCHs and/or the quality of service information of the LCH that are/is sent by the first terminal device. Therefore, the first terminal device can configure (or activate), based on the first configuration message, the function of sending the indication information by the first terminal device, the second device and the first terminal device can reach a consensus on the content of the indication information, and the consistency of function cognition of the indication information can be maintained.

In a possible implementation, a specific implementation in which the first terminal device determines, based on the first configuration message, to send the indication information to the second device is as follows: The first terminal device determines that a trigger condition is met, where the trigger condition is associated with one or more of the LCH identifier, the LCG identifier, the bearer identifier, the data volume threshold, and the timer duration. Further, the first terminal device may send the indication information to the second device. By implementing the possible implementation, the first terminal device may determine, by detecting whether the to-be-transmitted data meets the trigger condition, a specific occasion for sending an indication message to the second device.

In a possible implementation, before receiving the first configuration message, the first terminal device may further send first information to the third communication device or the second device, where the first information includes information about a capability of the first terminal device to support sending of the indication information. By implementing the possible implementation, the third communication device or the second device may send the first configuration message to the first terminal device only when determining, based on the first information, that the first terminal device has the capability of sending the indication information, so that the first terminal device can configure (or activate), based on the first configuration message, the function of sending the indication information by the first terminal device.

In a possible implementation, the indication information further includes one or more of load status information of a physical channel on the sidelink, transmission time information corresponding to the to-be-transmitted data, and a delay budget corresponding to the to-be-transmitted data. By implementing the possible implementation, the second device may determine time for obtaining the target resource. Further, this avoids a transmission resource waste caused by premature obtaining of the transmission resources when the second device does not receive the to-be-transmitted data.

In a possible implementation, the third communication device is a network device or a third terminal device. By implementing the possible implementation, the second device may obtain the target resource for the to-be-transmitted data based on a specific scenario of the third communication device.

According to a second aspect, this application provides a resource scheduling method. The method may be applied to a second device or a component (a chip, a processor, or the like) of a second device. For example, the method is applied to the second device. The method includes: The second device receives indication information sent by a first terminal device, where the indication information includes data volume information of to-be-transmitted data on a sidelink; and the second device obtains a target resource based on the data volume information of the to-be-transmitted data, where the target resource is used by the second device to forward, to a third communication device, data received by the second device from the sidelink. There is a sidelink between the first terminal device and the second device, and there is a connection between the second device and the third communication device.

Based on the method described in the second aspect, a second terminal may obtain, in advance based on the data volume information that is of the to-be-transmitted data on the sidelink and that is included in the indication information sent by the first terminal device, a resource (namely, the target resource) required for forwarding the to-be-transmitted data, to shorten a time difference between time at which the second device receives the to-be-transmitted data of the first terminal device and time at which the second device forwards the to-be-transmitted data by using the target resource. In other words, a delay in forwarding the to-be-transmitted data sent by the first terminal device by the second device is reduced.

In a feasible implementation, before receiving the indication information sent by the first terminal device, the second device may further receive a second configuration message, where the second configuration message includes one or more of a correspondence between a logical channel LCH and a logical channel group LCG, an LCH identifier, a bearer identifier, an LCG identifier, a data volume threshold, and timer duration. By implementing the possible implementation, it can be ensured that the second device and the first terminal device reach a consensus on content of the indication information, and consistency of function cognition of the indication information is maintained.

In a feasible implementation, after receiving the second configuration message, the second device may further determine a first configuration message based on the second configuration message. The first configuration message includes one or more of the correspondence between the LCH and the LCG, the LCH identifier, the bearer identifier, the LCG identifier, the data volume threshold, and the timer duration. The second device sends the first configuration message to the first terminal device, where the first configuration message is used by the first terminal device to determine to send the indication information to the second device. By implementing the possible implementation, when the third communication device is a network device, and the first terminal device is not in a network coverage area of the third communication device, the second device may forward the first configuration message, to ensure that the first terminal device can still configure (or activate), based on the first configuration message, a function of sending the indication information by the first terminal device. This expands the network coverage area of the third communication device.

In a feasible implementation, before receiving the indication information sent by the first terminal device, the second device may further receive the quality of service information of the LCH and/or a mapping relationship between LCHs that are/is sent by the first terminal device; the second device determines a first configuration message based on the transmission quality information of the LCH and/or the mapping relationship between the LCHs; and the second device sends the first configuration message to the first terminal device, where the first configuration message is used by the first terminal device to determine to send the indication information to the second device. By implementing the possible implementation, when the third communication device is a network device, and the third communication device cannot send the first configuration message to the first terminal device (for example, a relay device is a relay device that uses a layer 3 relay), the second device may determine the first configuration message based on the quality of service information of the LCH, and send the first configuration message to the first terminal device, to ensure that the first terminal device can configure (or activate) the function of sending the indication information based on the first configuration message. This weakens a limitation on the relay device in a sidelink scenario, and expands application scenarios of the relay device. Alternatively, when the third communication device is a remote device, the second device determines the first configuration message based on the mapping relationship between the sidelink LCHs, and sends the first configuration message to the first terminal device, to ensure that the first terminal device can configure (or activate), based on the first configuration message, a function of sending, by the first terminal device, the indication information to a relay device through a PC5 communication interface on the sidelink.

In a feasible implementation, a specific implementation in which the second device receives the second configuration message is as follows: The second device receives the second configuration message sent by the first terminal device. By implementing the possible implementation, the second device and the first terminal device may maintain consistency in the content of the indication information and the function cognition of the indication information.

In a feasible implementation, a specific implementation in which the second device receives the second configuration message is as follows: The second device receives the second configuration message sent by the third communication device. By implementing the possible implementation, the third communication device directly sends a configuration message to the second device. This improves efficiency of configuring an indication information function by the third communication device.

In a feasible implementation, a specific implementation in which the second device obtains the target resource based on the data volume information of the to-be-transmitted data is as follows: The second device sends a pre-emptive buffer status report to the third communication device based on the data volume information of the to-be-transmitted data, where the pre-emptive buffer status report includes the data volume information of the to-be-transmitted data, the data volume information of the to-be-transmitted data is used by the third communication device to allocate the target resource to the second device, and the target resource is used to forward, to the third communication device, the data received by the second device from the sidelink. By implementing the possible implementation, the second device may obtain the target resource from the third terminal device in advance based on the data volume information of the to-be-transmitted data, to ensure that, after receiving, from the sidelink, the data sent by the first terminal device, the second device can forward the data by using the target resource in time. This reduces a relay forwarding delay.

In a feasible implementation, the indication information further includes one or more of load status information of a physical channel on the sidelink, transmission time information corresponding to the to-be-transmitted data, and a delay budget corresponding to the to-be-transmitted data. By implementing the possible implementation, the second device may determine, by using one or more of the load status information of the physical channel on the sidelink, the transmission time information corresponding to the to-be-transmitted data, and the delay budget corresponding to the to-be-transmitted data that are in the indication information, specific time for obtaining the target resource. Further, this avoids a transmission resource waste caused by premature obtaining of the transmission resource when the second device does not receive the to-be-transmitted data.

In a feasible implementation, before sending the first configuration message to the first terminal device, the second device receives first information sent by the first terminal device, where the first information includes information about a capability of the first terminal device to support sending of the indication information. A specific implementation in which the second device sends the first configuration message to the first terminal device is as follows: The second device sends the first configuration message to the first terminal device when determining, based on the first information, that the first terminal device has the capability of sending the indication information. By implementing the possible implementation, when the second device sends the first configuration message to the first terminal device, the second device sends the first configuration message to the first terminal device only when determining, based on the first information, that the first terminal device has the capability of sending the indication information. This reduces unnecessary signaling overheads.

According to a third aspect, this application provides a resource scheduling method. The method may be applied to a third communication device or a component (a chip, a processor, or the like) of a third communication device. For example, the method is applied to the third communication device. The method includes: The third communication device receives a pre-emptive buffer status report sent by a second device, where the pre-emptive buffer status report is generated after the second device receives indication information sent by a first terminal device, and the pre-emptive buffer status report includes data volume information of to-be-transmitted data on a sidelink; the third communication device allocates a target resource to the second device based on the data volume information of the to-be-transmitted data on the sidelink, where the target resource is used by the second device to forward, to the third communication device, data received by the second device from the sidelink. There is a sidelink between the first terminal device and the second device, and there is a connection between the second device and the third communication device.

Based on the method described in the third aspect, the third communication device allocates the target resource to the second device in advance based on the data volume information that is of the to-be-transmitted data on the sidelink and that is in the pre-emptive buffer status report sent by the second device, so that the second device can forward, by using the target resource, the data received by the second device from the sidelink, and the third communication device receives, as soon as possible, the data sent by the first terminal device. This improves data forwarding efficiency and reduces a relay forwarding delay.

In a feasible implementation, before receiving the pre-emptive buffer status report sent by the second device, the third communication device sends a first configuration message to the first terminal device, where the first configuration message is used by the first terminal device to determine to send the indication information to the second device, and the first configuration message includes one or more of a correspondence between a logical channel LCH and a logical channel group LCG, an LCH identifier, a bearer identifier, an LCG identifier, a data volume threshold, and timer duration. By implementing the possible implementation, when the third communication device is a network device, the third communication device directly sends a configuration message to the first terminal device, so that the first terminal device can configure (or activate), based on the first configuration message, a function of sending the indication information of the first terminal device, and improve efficiency of configuring an indication information function of the first terminal device.

In a feasible implementation, before receiving the pre-emptive buffer status report sent by the second device, the third communication device sends a second configuration message to the second device. The second configuration message includes one or more of the correspondence between the LCH and the LCG, the LCH identifier, the bearer identifier, the LCG identifier, the data volume threshold, and the timer duration. By implementing the possible implementation, when being a network device, the third communication device may send a configuration message to the second device, to ensure that the second device and the first terminal device can reach a consensus on content of the indication information, and consistency of function cognition of the indication information can be maintained.

In a feasible implementation, before sending the first configuration message to the first terminal device, the third communication device receives first information sent by the first terminal device, where the first information includes information about a capability of the first terminal device to support sending of the indication information. A specific implementation in which the third communication device sends the first configuration message to the first terminal device is as follows: The third communication device sends the first configuration message to the first terminal device when determining, based on the first information, that the first terminal device has the capability of sending the indication information. By implementing the possible implementation, when the third communication device sends the first configuration message to the first terminal device, the third communication device sends the first configuration message to the first terminal device only when determining, based on the first information, that the first terminal device has the capability of sending the indication information. This reduces signaling overheads.

In a feasible implementation, the third communication device is a network device. By implementing the possible implementation, the third communication device can allocate the target resource to the second device only when the third communication device is a network device, to avoid a case in which the second device sends the pre-emptive buffer status report to the third communication device when the third communication device is a third terminal device. This reduces transmission resource overheads.

According to a fourth aspect, this application provides a communication apparatus. The apparatus may be an apparatus in a terminal device or an apparatus that can be used together with a terminal device. The communication apparatus may alternatively be a chip system. The communication apparatus may perform the method according to the first aspect. A function of the communication apparatus may be implemented by hardware, or may be implemented by hardware by executing corresponding software. The hardware or the software includes one or more units corresponding to the functions. The unit may be software and/or hardware. For operations performed by the communication apparatus and beneficial effects thereof, refer to the method in the first aspect and the beneficial effects thereof. Repeated parts are not described again.

According to a fifth aspect, this application provides a communication apparatus. The apparatus may be an apparatus in a terminal device or an apparatus that can be used together with a terminal device. The communication apparatus may alternatively be a chip system. The communication apparatus may perform the method according to the second aspect. A function of the communication apparatus may be implemented by hardware, or may be implemented by hardware by executing corresponding software. The hardware or the software includes one or more units corresponding to the functions. The unit may be software and/or hardware. For operations performed by the communication apparatus and beneficial effects thereof, refer to the method in the second aspect and the beneficial effects thereof. Repeated parts are not described again.

According to a sixth aspect, this application provides a communication apparatus. The apparatus may be a network device, an apparatus in a network device, or an apparatus that can be used together with a network device. The communication apparatus may alternatively be a chip system. The communication apparatus may perform the method according to the third aspect. A function of the communication apparatus may be implemented by hardware, or may be implemented by hardware by executing corresponding software. The hardware or the software includes one or more units corresponding to the functions. The unit may be software and/or hardware. For operations performed by the communication apparatus and beneficial effects thereof, refer to the method in the third aspect, and the beneficial effects thereof. Repeated parts are not described again.

According to a seventh aspect, this application provides a communication apparatus. The communication apparatus includes a processor. When the processor invokes a computer program in a memory, the method performed by the first terminal device in the method according to the first aspect is performed.

In a feasible implementation, the communication apparatus further includes the memory. The memory is configured to store computer-executable instructions.

In another feasible implementation, the communication apparatus further includes the memory and a transceiver. The transceiver is configured to receive or send a signal. The memory is configured to store a computer program.

In still another feasible implementation, the communication apparatus further includes an interface circuit. The interface circuit is configured to receive computer-executable instructions and transmit the computer-executable instructions to the processor.

According to an eighth aspect, this application provides a communication apparatus. The communication apparatus includes a processor. When the processor invokes a computer program in a memory, the method performed by the second device in the method according to the second aspect is performed.

In a feasible implementation, the communication apparatus further includes the memory. The memory is configured to store computer-executable instructions. The processor is configured to execute the computer-executable instructions stored in the memory.

In another feasible implementation, the communication apparatus further includes the memory and a transceiver. The transceiver is configured to receive or send a signal. The memory is configured to store a computer program.

In still another feasible implementation, the communication apparatus further includes an interface circuit. The interface circuit is configured to receive computer-executable instructions and transmit the computer-executable instructions to the processor.

According to a ninth aspect, this application provides a communication apparatus. The communication apparatus includes a processor. When the processor invokes a computer program in a memory, the method performed by the third communication device in the method according to the third aspect is performed.

In a possible implementation, the communication apparatus further includes the memory. The memory is configured to store computer-executable instructions.

In another possible implementation, the communication apparatus further includes the memory and a transceiver. The transceiver is configured to receive or send a signal. The memory is configured to store a computer program.

In still another possible implementation, the communication apparatus further includes an interface circuit. The interface circuit is configured to receive computer-executable instructions and transmit the computer-executable instructions to the processor.

According to a tenth aspect, this application provides a computer-readable storage medium. The computer-readable storage medium is configured to store computer-executable instructions. When the computer-executable instructions are executed, the method performed by the first terminal device in the method according to the first aspect is implemented.

According to an eleventh aspect, this application provides a computer-readable storage medium. The computer-readable storage medium is configured to store computer-executable instructions. When the computer-executable instructions are executed, the method performed by the second device in the method according to the second aspect is implemented.

According to a twelfth aspect, this application provides a computer-readable storage medium. The computer-readable storage medium is configured to store computer-executable instructions. When the computer-executable instructions are executed, the method performed by the third communication device in the method according to the third aspect is implemented.

According to a thirteenth aspect, this application provides a computer program product including a computer program. When the computer program is executed, the method performed by the first terminal device in the method according to the first aspect is implemented.

According to a fourteenth aspect, this application provides a computer program product including a computer program. When the computer program is executed, the method performed by the second device in the method according to the second aspect is implemented.

According to a fifteenth aspect, this application provides a computer program product including a computer program. When the computer program is executed, the method performed by the third communication device in the method according to the third aspect is implemented.

According to a sixteenth aspect, this application provides a communication system. The communication system includes the communication apparatus according to the fourth aspect or the seventh aspect, the communication apparatus according to the fifth aspect or the eighth aspect, and the communication apparatus according to the sixth aspect or the ninth aspect.

### BRIEF DESCRIPTION OF DRAWINGS

FIG. 1 is a schematic diagram of an architecture of a resource scheduling system according to an embodiment of this application;
FIG. 2 is a schematic diagram of an NR V2X communication architecture according to an embodiment of this application;
FIG. 3 is a schematic flowchart of a resource scheduling method according to an embodiment of this application;
FIG. 4 is a schematic flowchart of another resource scheduling method according to an embodiment of this application;
FIG. 5a is a schematic diagram of a scenario in which a remote device communicates with a network device according to an embodiment of this application;
FIG. 5b is a schematic diagram of a scenario in which a remote device communicates with a remote device according to an embodiment of this application;
FIG. 5c is a schematic diagram of another scenario in which a remote device communicates with a remote device according to an embodiment of this application;
FIG. 6 is a schematic flowchart of a resource scheduling method in a scenario in which a remote device communicates with a network device according to an embodiment of this application;
FIG. 7 is a schematic flowchart of another resource scheduling method in a scenario in which a remote device communicates with a network device according to an embodiment of this application;
FIG. 8 is a schematic flowchart of still another resource scheduling method in a scenario in which a remote device communicates with a network device according to an embodiment of this application;
FIG. 9 is a schematic flowchart of still another resource scheduling method in a scenario in which a remote device communicates with a network device according to an embodiment of this application;
FIG. 10 is a schematic flowchart of a resource scheduling method in a scenario in which a remote device communicates with a remote device according to an embodiment of this application;
FIG. 11 is a schematic flowchart of another resource scheduling method in a scenario in which a remote device communicates with a remote device according to an embodiment of this application;
FIG. 12 is a schematic diagram of a structure of a communication apparatus according to an embodiment of this application;
FIG. 13a is a schematic diagram of a structure of another communication apparatus according to an embodiment of this application; and
FIG. 13b is a schematic diagram of a structure of still another communication apparatus according to an embodiment of this application.

### DESCRIPTION OF EMBODIMENTS

To make the objectives, technical solutions, and advantages of this application clearer, the following further describes this application in detail with reference to the accompanying drawings.

In the specification, the claims, and the accompanying drawings of this application, the terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of operations or units is not limited to the listed operations or units, but optionally further includes an unlisted operation or unit, or optionally further includes another inherent operation or unit of the process, the method, the product, or the device.

An "embodiment" mentioned in this specification means that a particular characteristic, structure, or feature described with reference to embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two, three, or more, and "and/or" is used to describe a correspondence relationship between corresponding objects, and indicates that there may be three relationships. For example, "A and/or B" may indicate that only A exists, only B exists, and both A and B exist, where A and B may be singular or plural. The character "/" generally represents an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

To better understand the solutions provided in this application, the following first describes a system architecture in this application.

The method provided in embodiments of this application may be applied to various communication systems, for example, an Internet of Things (internet of things, IoT) system, a narrow band Internet of Things (narrow band internet of things, NB-IoT) system, a long term evolution (long term evolution, LTE) system, a 5th-generation (5th-generation, 5G) communication system, an LTE-5G hybrid architecture, a 5G new radio (new radio, NR) system, and a new communication system emerging in future communication development.

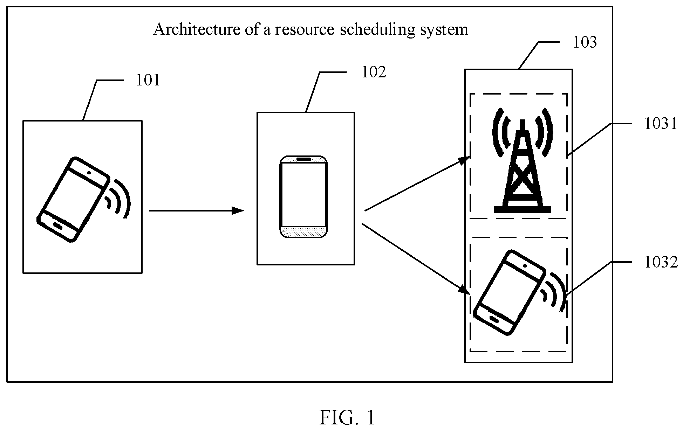

FIG. 1 is a schematic diagram of an architecture of a resource scheduling system according to an embodiment of this application. As shown in FIG. 1, the system architecture includes a first terminal device 101, a second device 102, and a third communication device 103. There is a sidelink between the first terminal device 101 and the second device 102, and there is a connection between the second device 102 and the third communication device 103. The third communication device 103 may be a network device 1031 or a third terminal device 1032. It should be understood that, when the third communication device is the third terminal device 1032, there is a sidelink connection between the second device 102 and the third terminal device 1032. When the third communication device 103 is the network device 1031, there is a Uu interface connection between the second device 102 and the network device 1031.

In this embodiment of this application, the first terminal device 101 sends, to the second device 102 based on data volume information of to-be-transmitted data on a sidelink, indication information that carries the data volume information of the to-be-transmitted data on the sidelink. After receiving the indication information sent by the first terminal device 101, the second device 102 obtains, based on the data volume information that is of the to-be-transmitted data on the sidelink and that is in the indication information, a target resource to forward data received by the second device 102 from the sidelink. Further, after receiving the to-be-transmitted data on the sidelink sent by the first terminal device 101, the second device 102 may forward, to the third communication device 103 by using the target resource, the data received from the sidelink. In this resource allocation manner, a relay device (namely, the second device 102) can obtain the target resource based on the data volume information that is of the to-be-transmitted data on the sidelink and that is in the indication information. This avoids a case in which the relay device (namely, the second device 102) needs to obtain the target resource after receiving the to-be-transmitted data on the sidelink sent by the first terminal device in a conventional method, so that a relay forwarding delay is reduced.

The terminal devices in embodiments of this application, such as the first terminal device, the second device, and the third terminal device, are entities on a user side that are configured to receive or transmit a signal. The terminal device may be a device that provides a user with voice and/or data connectivity, for example, a handheld device or a vehicle-mounted device having a wireless connection function. The terminal device may alternatively be another processing device connected to a wireless modem. The terminal device may communicate with a radio access network (radio access network, RAN). The terminal device may also be referred to as a wireless terminal device, a subscriber unit (subscriber unit), a subscriber station (subscriber station), a mobile station (mobile station), a mobile (mobile) console, a remote station (remote station), an access point (access point), a remote terminal device (remote terminal), an access terminal device (access terminal), a user terminal device (user terminal), a user agent (user agent), a user device (user device), user equipment (user equipment, UE), or the like. The terminal device may be a mobile terminal device, such as a mobile phone (also referred to as a "cellular" phone) and a computer that has a mobile terminal device, and for example, may be a portable mobile apparatus, a pocket-sized mobile apparatus, a handheld mobile apparatus, a computer built-in mobile apparatus, or an in-vehicle mobile apparatus, where such mobile apparatuses exchange languages and/or data with the radio access network. For example, the terminal device may alternatively be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). Common terminal devices include, for example, a car, a drone, a mechanical arm, a mobile phone, a tablet computer, a notebook computer, a palmtop computer, a mobile internet device (mobile internet device, MID), and a wearable device such as a smartwatch, a smart band, or a pedometer. However, embodiments of this application are not limited thereto.

The network device (or an access network device) in embodiments of this application is an entity for transmitting or receiving a signal on a network side, may be configured to mutually convert a received over-the-air frame and an internet protocol (internet protocol, IP) packet, and serves as a router between the terminal device and a remaining part of an access network. The remaining part of the access network may include an IP network and the like. The access network device may further coordinate attribute management of an air interface. For example, the access network device may be an evolved NodeB (evolved NodeB, eNB or e-NodeB) in LTE, may be a new radio controller (new radio controller, NR controller), may be an ng-eNB, may be a gNodeB (gNB) in a 5G system, may be a centralized network element (centralized unit), may be a new radio base station, may be a remote radio module, may be a micro base station, may be a relay (relay), may be a distributed network element (distributed unit), may be a reception point (transmission reception point, TRP), a transmission point (transmission point, TP), or any other radio access device. However, this is not limited in this embodiment of this application.

To better understand the solutions provided in this application, the following describes related terms in embodiments of this application.

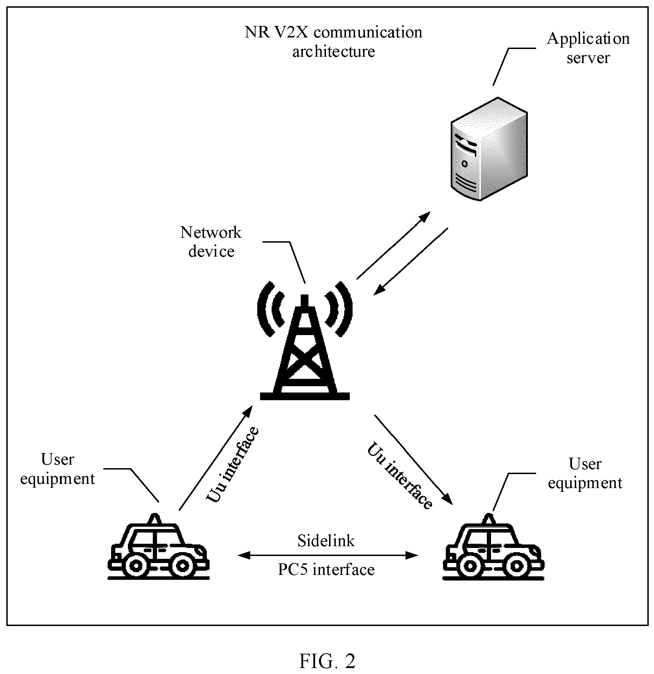

Sidelink (sidelink, SL): Refer to an NR V2X communication architecture provided in FIG. 2. A direct communication link between V2X user equipments (user equipments, UEs) is defined as a sidelink.

PC5 interface: Refer to the NR V2X communication architecture provided in FIG. 2. A communication interface corresponding to a direct communication link for communication between V2X UEs (namely, user equipments in the figure) is defined as a PC5 interface, and V2X data may be transmitted from one V2X UE to another V2X UE through the PC5 interface.

Uu interface: Refer to the NR V2X communication architecture provided in FIG. 2. A communication interface of a link between a V2X UE (namely, a user equipment in the figure) and a network device is defined as a Uu interface. In a communication scenario in FIG. 2, there may be two cases in which the V2X UEs communicate with each other. Case 1: One V2X UE may send V2X data to the network device through the Uu interface, and the network device sends the V2X data to a V2X application server corresponding to the network device. Further, the V2X application server processes the V2X data and sends processed V2X data to the network device, and the network device sends the V2X data to another V2X UE through the Uu interface. Case 2: One V2X UE directly sends V2X data to another V2X UE through a PC5 interface on a sidelink.

Mode 1: When a transmission user equipment (transmission user equipment, Tx UE) is in a connected state (in other words, the Tx UE is connected to a network device), the Tx UE sends a sidelink buffer status report (sidelink buffer status report, SL-BSR) to the network device, so that the network device allocates a sidelink transmission resource to the transmission user equipment. Such a manner of obtaining a transmission resource is referred to as Mode 1.

Mode 2: A Tx UE may be in an idle state (in other words, the Tx UE is not connected to a network device)/a connected state/an inactive state (Inactive state), and the Tx UE selects (determines) a transmission resource from a resource pool configured by the Tx UE, to transmit to-be-transmitted sidelink data on a logical channel. Such a manner of obtaining a transmission resource is referred to as Mode 2.

Relay device (relay user equipment, Relay UE): In a V2X communication network architecture, a device configured to relay and forward data received from a Remote UE to a reception user equipment (reception user equipment, Rx UE) to ensure communication between a Remote UE and an Rx UE is referred to as a relay device. In other words, the relay device is a communication device having a relay function, and includes but is not limited to a user equipment having a relay function.

Remote device (remote user equipment, Remote UE): A user equipment that cannot directly communicate with an Rx UE in a V2X communication network architecture, but can only indirectly communicate with the Rx UE by having a relay device for data forwarding.

Logical channel (logical channel, LCH): A channel that transmits different types of information on a physical channel. The logical channel may be classified into a control channel and a service channel. The control channel is used to transmit control plane information, and the service channel is used to transmit user plane information. In other words, the control channel is used to transmit signaling or synchronized data, and the service channel is used to transmit encoded and encrypted service data.

Logical channel group (logical channel group, LCG): A logical channel group may include a plurality of logical channels. Usually, different logical channels may be grouped into one or more logical channel groups based on quality of service levels of the logical channels.

Layer 2 relay (layer 2 relay, L2R): When a relay device is a layer 2 relay, a medium access control (medium access control, MAC) layer function and a radio link control (radio link control, RLC) layer function are usually included. Sometimes, another layer may be further included above the RLC layer, for example, a protocol layer for performing forwarding and controlling, such as a bandwidth allocation protocol (bandwidth allocation protocol, BAP) layer. Data sent by a Remote UE is usually forwarded at the RLC layer or another protocol layer. When the layer 2 relay is used, a network device may usually control delivery of configuration parameters of the relay device and the remote device.

Layer 3 relay (layer 3 relay, L3R): When a relay device is a layer 3 relay, more functions are added on the basis of a layer 2 relay. Some or all radio resource control (radio resource control, RRC) functions may be performed. The relay device may be considered as a wireless backhaul network device. Data sent by a Remote UE is usually forwarded at a protocol layer such as an IP layer. When the layer 3 relay is used, the network device usually cannot configure and control the remote device.

The following further describes resource scheduling methods provided in embodiments of this application in detail.

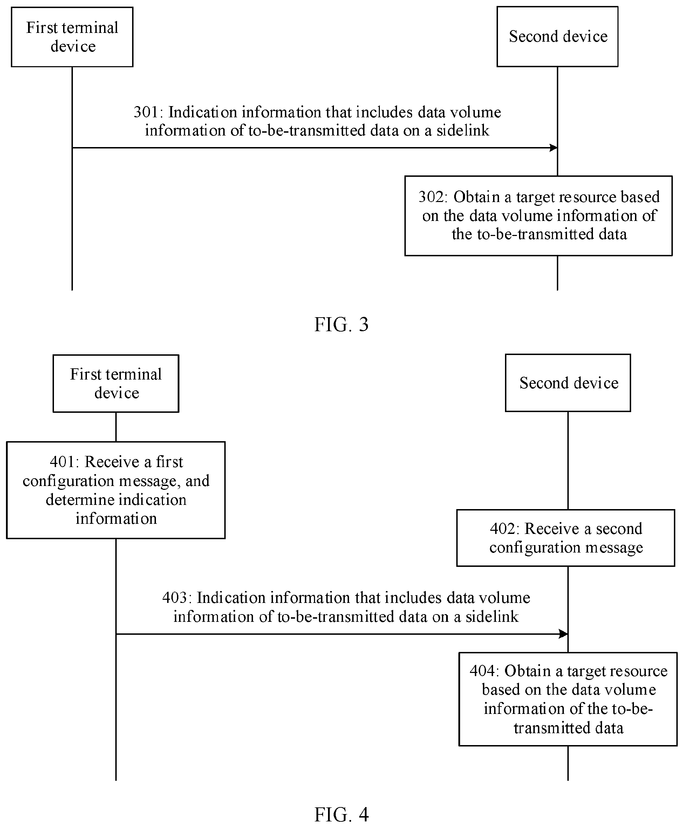

FIG. 3 is a schematic flowchart of a resource scheduling method according to an embodiment of this application. As shown in FIG. 3, the resource scheduling method includes the following step 301 and step 302. The method shown in FIG. 3 may be performed by a first terminal device and a second device, or a chip in a first terminal device and a chip in a second device. An example in which the method performed by the first terminal device and the second device is used for description in FIG. 3.

301: The first terminal device sends indication information to the second device, where the indication information includes data volume information of to-be-transmitted data on a sidelink, the data volume information of the to-be-transmitted data is used by the second device to obtain a target resource, and the target resource is used by the second device to transmit (or forward), to a third communication device, data received from the sidelink.

The first terminal device is a remote device, and the second device is a relay device. There is a sidelink between the first terminal device and the second device, and there is a connection between the second device and the third communication device. It should be known that the connection between the second device and the third communication device is a communication connection.

When there is to-be-transmitted data on a logical channel corresponding to the sidelink between the first terminal device and the second device, the first terminal device may obtain data volume information of the to-be-transmitted data, and send indication information to the second device based on the data volume information of the to-be-transmitted data. For example, the indication information may be referred to as a sidelink buffer status indication (sidelink buffer status indication, SL-BSI). The data volume information of the to-be-transmitted data included in the indication information may be a data volume, for example, a value in a unit of a bit or byte, or an index value of a data volume range. When the index value is 1, it indicates that a value of the data volume is greater than or equal to 1 byte and less than 10 bytes. In specific implementation, a representation form of the data volume information of the to-be-transmitted data included in the indication information is not limited.

302: The second device receives the indication information sent by the first terminal device, and obtains the target resource based on the data volume information of the to-be-transmitted data.

In this step, an example in which the received indication information sent by the first terminal device is the SL-BSI is used. The second device receives the SL-BSI sent by the first terminal device. Further, the second device may obtain the data volume information of the to-be-transmitted data on the sidelink from the SL-BSI, and further obtain the target resource based on the data volume information of the to-be-transmitted data. When the third communication device is a network device, the target resource obtained by the second device is a Uu transmission resource. When the third communication device is a third terminal device (namely, another Remote UE), the target resource obtained by the second device is a sidelink transmission resource.

It can be learned that, by implementing the resource scheduling method described in FIG. 3, the first terminal device may send the indication information to the second device, so that the second device knows the to-be-received data volume information of the to-be-transmitted data on the sidelink in advance. Further, the second device may obtain a transmission resource in advance based on the data volume information of the to-be-transmitted data on the sidelink. This avoids a case in which the first terminal device transmits the to-be-transmitted data on the sidelink to the second device and the second device then obtains the transmission resource based on the data volume information of the to-be-transmitted data. Therefore, a delay in forwarding the to-be-transmitted data by the second device is reduced. In other words, a relay forwarding delay is reduced, and efficiency of forwarding data by the second device is improved.

FIG. 4 is a schematic flowchart of another resource scheduling method according to an embodiment of this application. As shown in FIG. 4, the resource scheduling method includes the following steps.

401: A first terminal device receives a first configuration message, and determines, based on the first configuration message, to send indication information to a second device.

The first terminal device receives the first configuration message, where the first configuration message may include a trigger condition that triggers the first terminal device to send the indication information or data content of the indication information. Further, the first terminal device may determine, based on the trigger condition that triggers the first terminal device to send the indication information and that is in the first configuration message, to send the indication information to the second device. In other words, after receiving the first configuration message, the first terminal device may determine, based on the first configuration message, when to send the indication information to the second device, and/or the first terminal device may determine, based on the first configuration message, to send, to the second device, the indication information that includes specific data content. The trigger condition of the indication information is a trigger condition that triggers the first terminal device to send the indication information to the second device, and the data content of the indication information is data content carried in the indication information.

In a possible implementation, the first configuration message includes one or more of a correspondence between an LCH and an LCG, an LCH identifier, a bearer identifier, an LCG identifier, a data volume threshold, and timer duration. In this case, the trigger condition is associated with one or more of the LCH identifier, the bearer identifier, the LCG identifier, the data volume threshold, and the timer duration.

The LCH identifier may be a character string such as LCH code or a name, and the LCH identifier corresponds to a unique LCH. The LCG identifier may be a character string such as LCG code or a name, and the LCG identifier corresponds to a unique LCG. The bearer identifier is a character string such as bearer code or a name, and the bearer identifier corresponds to a unique bearer. The correspondence between the LCH and the LCG may be a correspondence between the LCG identifier and the LCH identifier. For example, an LCH1, LCH2, LCH3, LCH4, LCH5 and LCH6 are configured for a Remote UE (namely, the first terminal device), and the first configuration message includes indication information or configuration that allocates the LCH1, the LCH2, and the LCH3 to the LCG1 (in other words, the LCH1, the LCH2, and the LCH3 correspond to the LCG1), and allocates the LCH4, the LCH5, and the LCH6 to the LCG2 (in other words, the LCH4, the LCH5, and the LCH6 correspond to the LCG2). The data volume threshold is a value corresponding to a data volume of the LCH or the LCG. For example, a data volume threshold corresponding to an LCG1 is X bytes. In this case, when the data volume of the LCG1 is greater than or equal to X bytes, the first terminal device sends the indication information to the second device, where X is a positive integer greater than or equal to 1.

In an example, the first configuration message includes LCH identifiers: an LCH1 and an LCH2. In this case, the trigger condition is that there is to-be-transmitted data on the LCH1/LCH2. To be specific, after receiving the first configuration message, the first terminal device sends the indication information to the second device when there is to-be-transmitted data on the LCH1 and/or the LCH2, where an indication message carries data volume information of the to-be-transmitted data on the LCH1 and/or the LCH2. By using the method, priorities of some LCHs are increased. When there is to-be-transmitted data on an LCH, target data may be preferentially obtained based on data volume information of the to-be-transmitted data on the LCH, to preferentially transmit the to-be-transmitted data on the LCH.

In another example, the first configuration message includes LCG identifiers: an LCG1 and an LCG2. In this case, the trigger condition is that there is to-be-transmitted data on the LCG1 or the LCG2. To be specific, after receiving the first configuration message, the first terminal device sends the indication information to the second device when there is to-be-transmitted data on the LCG1 and/or the LCG2, where an indication message carries data volume information of the to-be-transmitted data on the LCG1 and/or the LCG2. By using the method, priorities of some LCGs are increased, and when there is to-be-transmitted data on an LCG, target data may be preferentially obtained based on data volume information of the to-be-transmitted data on the LCG, to preferentially transmit the to-be-transmitted data on the LCG.

In still another example, the first configuration message includes the correspondence between the LCH and the LCG. For example, an LCG1 corresponds to an LCH1, an LCH2, and an LCH3. In this case, after receiving the first configuration message, the first terminal device allocates the LCH1, the LCH2, and the LCH3 to the LCG1 based on the first configuration message, and the first terminal device sends the indication information to the second device, where an indication message carries data volume information of to-be-transmitted data on the LCG1 (in other words, the LCH1, the LCH2, and/or the LCH3). By using the method, LCHs may be grouped based on a situation in an actual application scenario to obtain an LCG, to improve adaptability of the indication information in the actual application scenario.

In still another example, the first configuration message includes bearer identifiers: a bearer 1 and a bearer 2. In this case, the trigger condition is that there is to-be-transmitted data on the bearer 1/the bearer 2. To be specific, after receiving the first configuration message, the first terminal device sends the indication information to the second device when there is to-be-transmitted data on the bearer 1 or the bearer 2, where an indication message carries data volume information of the to-be-transmitted data on the bearer 1 and the bearer 2. By using the method, priorities of some bearers are increased, and when there is to-be-transmitted data on a bearer, target data may be preferentially obtained based on data volume information of the to-be-transmitted data on the bearer, to preferentially transmit the to-be-transmitted data on the bearer.

In still another example, the first configuration message includes a data volume threshold X bytes and an LCH1 identifier or an LCG1 identifier. In this case, the trigger condition is that there is to-be-transmitted data greater than or equal to X bytes on the LCH1 or there is to-be-transmitted data greater than or equal to X bytes on the LCG1. To be specific, after receiving the first configuration message, the first terminal device sends the indication information to the second device when a volume of to-be-transmitted data on the LCH1 or the LCG1 is greater than or equal to X bytes, where an indication message carries data volume information of the to-be-transmitted data on the LCH1 or the LCG1. By using the method, when a data volume of to-be-transmitted data on the LCH/LCG exceeds the data volume threshold, the indication information is sent to indicate the second device to obtain a target resource. This avoids a transmission resource waste caused by frequent sending of the indication information that is sent provided that there is data on the LCH/LCG.

In still another example, the first configuration message includes timer duration T. In this case, the trigger condition is that a time interval between second indication information and first indication information is greater than or equal to the timer duration T. To be specific, after sending the first indication information to the second device, the first terminal device does not send the second indication information to the second device again within the timer duration T. In other words, the interval between time at which the first terminal device sends the first indication information to the second device and time at which the first terminal device sends the second indication information to the second device is greater than or equal to the timer duration T. A specific value of the timer duration T may be obtained through calculation by a developer based on an experimental scenario, and may be correspondingly adjusted based on a specific application scenario in the future, or may be dynamically adjusted by the first terminal device based on quality of service information or a load status (for example, channel busy ratio information) of an LCH or LCG. This is not specifically limited in this application. By using the method, a case in which a resource waste is caused because the first terminal device frequently sends the indication information to the second device can be avoided.

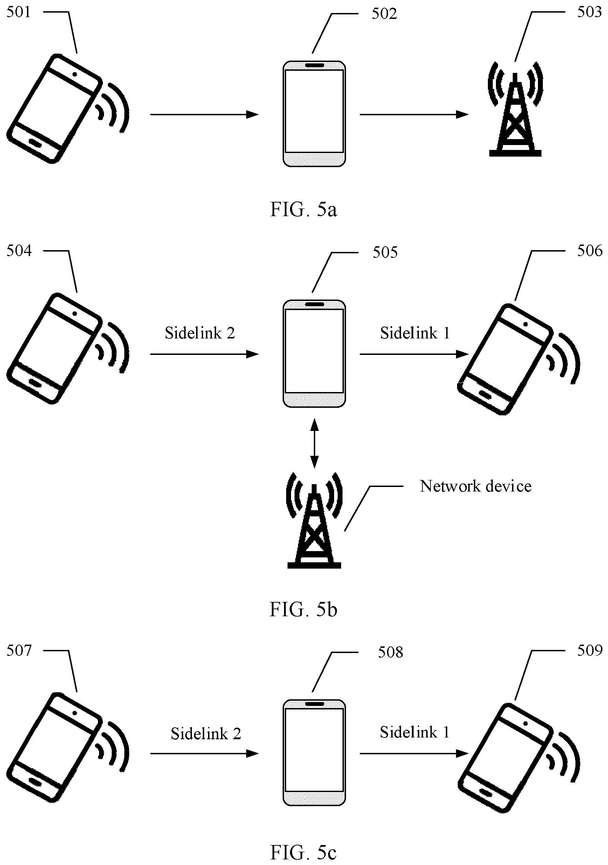

In an application scenario, FIG. 5a is a schematic diagram of a scenario in which a remote device communicates with a network device. A third communication device is a network device 503, the first terminal device is a remote device 501, and the second device is a relay device 502. There is a sidelink between the remote device 501 and the relay device 502, and there is a connection between the relay device 502 and the network device 503. In this case, if the relay device 502 is a relay device that uses a layer 2 relay, the network device may send a configuration message to the first terminal device and the second device. In other words, the third communication device (the network device 503) may send the first configuration message received by the first terminal device, or the third communication device (the network device 503) may indicate the second device to determine and send, based on the second configuration message, the first configuration message received by the first terminal device. If the relay device 502 is a relay device that uses a layer 3 relay, the second device (the relay device 502) may determine, based on quality of service information of an LCH on a sidelink between the remote device 501 and the relay device 502, the first configuration message received by the first terminal device. The quality of service (quality of service, QoS) information of the LCH refers to a quality of service requirement that needs to be guaranteed for service data carried on the logical channel, and correspondingly includes a set of metrics that includes one or more factors such as a priority, service availability, a delay, a delay jitter, a throughput, a bit error, a packet loss rate, and the like, and that may be quantified as a level.

In another scenario, FIG. 5b is a schematic diagram of a scenario in which a remote device communicates with a remote device. A third communication device is a remote device 506, the first terminal device is a remote device 504, and the second device is a relay device 505. There is a sidelink between the remote device 504 and the relay device 505, there is a connection between the relay device 505 and the remote device 506, and the relay device 505 is in a connected state (in other words, connected to a network device). In this case, the first configuration message received by the first terminal device is determined by the second device (the relay device 505) based on a mapping relationship between an LCH on a sidelink 1 (a sidelink between the remote device 506 and the relay device 505) and an LCH on a sidelink 2 (a sidelink between the remote device 504 and the relay device 505).

In still another scenario, FIG. 5c is a schematic diagram of a scenario in which a remote device communicates with a remote device. A third communication device is a remote device 509, the first terminal device is a remote device 507, and the second device is a relay device 508. There is a sidelink between the remote device 507 and the relay device 508, there is a connection between the relay device 508 and the remote device 509, and the relay device 508 is in an idle state (in other words, not connected to a network device). In this case, the first configuration message received by the first terminal device is determined by the second device (the relay device 508) based on a mapping relationship between an LCH on a sidelink 1 (a sidelink between the remote device 507 and the relay device 508) and an LCH on a sidelink 2 (a sidelink between the remote device 509 and the relay device 508).

402: The second device receives a second configuration message.

The second configuration message includes one or more of the correspondence between the LCH and the LCG, the LCH identifier, the bearer identifier, the LCG identifier, the data volume threshold, and the timer duration.

The second device receives the second configuration message, and reaches a consensus with the first terminal device on data format content of the indication information based on the second configuration message. In other words, the second device knows that a specific type of data content should be included in the indication information received by the second device. For example, the second configuration message includes an LCH1 identifier. In this case, the indication information sent by the first terminal device carries data volume information of to-be-transmitted data on the LCH1, and the second device may receive the indication information that carries the data volume information of the to-be-transmitted data on the LCH1.

In an application scenario, FIG. 5a is a schematic diagram of a scenario in which a remote device communicates with a network device. A third communication device is a network device 503. In this case, if a relay device 502 is a relay device that uses a layer 2 relay, the third communication device (the network device 503) may send the second configuration message received by the second device, or the third communication device (the network device 503) may indicate the first terminal device to determine and send, based on the first configuration message, the second configuration message received by the second device.

It should be known that an execution sequence of step 402 and step 401 is not limited, and is only an example in this embodiment. This is not specifically limited herein. In other words, the execution sequence may also be that step 402 is performed before step 401, or step 401 and step 402 are performed at the same time.

In a possible implementation, the second device receives a third configuration message, where the third configuration message includes an activated parameter for a pre-emptive BSR mechanism and/or a pre-emptive sidelink buffer status report (pre-emptive sidelink buffer status report, pre-emptive SL-BSR) mechanism, for example, a usePreBSR parameter and/or a use SL-BSR parameter. The second device may activate a pre-emptive BSR mechanism of the second device based on the use PreBSR parameter in the third configuration message, and/or activate a pre-emptive SL-BSR mechanism of the second device based on the use SL-BSR parameter in the third configuration message. It should be known that the third configuration message may be the second configuration message or another configuration message other than the second configuration message. This is not specifically limited in this application. The pre-emptive BSR mechanism is a mechanism in which a UE sends a pre-emptive BSR to the network device to obtain a Uu transmission resource. The pre-emptive SL-BSR mechanism is a mechanism in which the second device sends a pre-emptive SL-BSR to the network device to advance a sidelink transmission resource.

403: The first terminal device sends the indication information to the second device, where the indication information includes the data volume information of the to-be-transmitted data on a sidelink.

The first terminal device determines the indication information based on a specific implementation of step 401, and sends the indication information to the second device. For a specific implementation of sending the indication information by the first terminal device, refer to the specific implementation of step 301 in the foregoing embodiment. Details are not described herein again.

404: The second device receives the indication information sent by the first terminal device, and obtains a target resource based on the data volume information of the to-be-transmitted data, where the target resource is used by the second device to transmit, to the third communication device, data received from the sidelink.

After receiving the indication information sent by the first terminal device, the second device obtains, from the indication information, the data volume information of the to-be-transmitted data of the first terminal device, and obtains the target resource that can be used to transmit the to-be-transmitted data to the third communication device. When the third communication device is a network device, the target resource is a Uu transmission resource. When the third communication device is a third terminal device (another remote device), the target resource is a sidelink transmission resource.

In an application scenario, FIG. 5a is a schematic diagram of a scenario in which a remote device communicates with a network device. The third communication device is a network device 503, the first terminal device is a remote device 501, and the second device is a relay device 502. There is a sidelink between the remote device 501 and the relay device 502, and there is a connection between the relay device 502 and the network device 503. In this case, the second device activates a pre-emptive BSR mechanism of the second device based on the third configuration message. Further, after receiving an SL-BSI sent by the first terminal device, the second device may send a pre-emptive BSR to the third communication device (the network device 503) based on data volume information that is of to-be-transmitted data on a sidelink and that is in the SL-BSI, to obtain a target resource allocated by the third communication device (the network device 503).

In another scenario, FIG. 5b is a schematic diagram of a scenario in which a remote device communicates with a remote device. The third communication device is a remote device 506, the first terminal device is a remote device 504, and the second device is a relay device 505. There is a sidelink between the remote device 504 and the relay device 505, there is a connection between the relay device 505 and the remote device 506, and the relay device 505 is in a connected state (in other words, connected to a network device). In this case, the second device activates a pre-emptive SL-BSR mechanism of the second device based on the third configuration message. Further, after receiving an SL-BSI sent by the first terminal device, the second device may send a pre-emptive SL-BSR to the network device based on data volume information that is of to-be-transmitted data on a sidelink and that is in the SL-BSI, to obtain a target resource for transmitting the to-be-transmitted data on the sidelink. In other words, in this case, the relay device obtains a transmission resource in Mode 1, and forwards, to the remote device 506 by using the transmission resource, data received from the sidelink.

In still another scenario, FIG. 5c is a schematic diagram of a scenario in which a remote device communicates with a remote device. The third communication device is a remote device 509, the first terminal device is a remote device 507, and the second device is a relay device 508. There is a sidelink between the remote device 507 and the relay device 508, there is a connection between the relay device 508 and the remote device 509, and the relay device 508 is in an idle state (in other words, not connected to a network device). In this case, after receiving an SL-BSI sent by the first terminal device, the second device may determine, from a resource pool of the second device based on data volume information that is of to-be-transmitted data on a sidelink and that is in the SL-BSI, a target resource for transmitting the to-be-transmitted data on the sidelink. In other words, in this case, the relay device obtains a transmission resource in Mode 2, and forwards, to the remote device 509 by using the transmission resource, data received from the sidelink.

It can be learned that, by implementing the resource scheduling method described in FIG. 4, the first terminal device receives the first configuration message, and determines, based on the first configuration message, to send the indication information to the second device. To be specific, the first terminal device may activate, by using the first configuration message, a function of sending the SL-BSI to the relay device, and determine content of the SL-BSI. The second device receives second configuration information, to reach a consensus with the first terminal device on the data content included in the SL-BSI. Further, after receiving the SL-BSI sent by the first terminal device, the second device may obtain the target resource more accurately based on the data volume information of the to-be-transmitted data, and forward, to the third communication device by using the target resource, the data received by the second device from the sidelink.

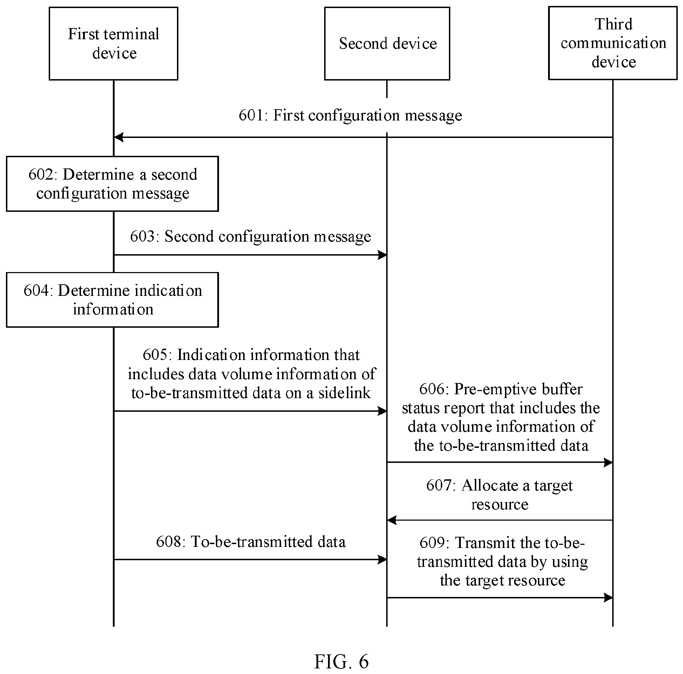

FIG. 6 is a schematic flowchart of a resource scheduling method in a scenario in which a remote device communicates with a network device according to an embodiment of this application. The scenario in which the remote device communicates with the network device is shown in FIG. 5a. A third communication device is a network device 503, a first terminal device is a remote device 501, and a second device is a relay device 502. There is a sidelink between the remote device 501 and the relay device 502, and there is a connection between the relay device 502 and the network device 503. The resource scheduling method includes the following steps shown in FIG. 6.

601: The first terminal device receives a first configuration message sent by the third communication device.

The first configuration message is used by the first terminal device to determine to send indication information to the second device. The first configuration message includes one or more of a correspondence between an LCH and an LCG, an LCH identifier, a bearer identifier, an LCG identifier, a data volume threshold, and timer duration.

In a possible implementation, before receiving the first configuration message sent by the third communication device, the first terminal device sends first information to the third communication device, where the first information includes information about a capability of the first terminal device to support sending of the indication information. The third communication device receives the first information sent by the first terminal device, and sends the first configuration message to the first terminal device when determining, based on the first information, that the first terminal device has the capability of supporting sending of the indication information. For example, the first information carries a first parameter. For example, if the first information carries a parameter supportSL-BSI, it indicates that the first terminal device supports sending of the indication information. In this case, the first terminal device sends the first information to the third communication device. After receiving the first information, if the third communication device detects that the first information carries the first parameter, the third communication device may determine that the first terminal device has the capability of sending the indication information, and further send the first configuration message to the first terminal device. After receiving a first message, if the third communication device detects that the first information does not carry the first parameter, the third communication device may determine that the first terminal device does not have the capability of sending the indication information, and further does not send the first configuration message to the first terminal device.

In a possible implementation, the second device receives a third configuration message, where the third configuration message includes an activated parameter for a pre-emptive BSR mechanism, for example, a use PreBSR parameter. The second device may activate a pre-emptive BSR mechanism of the second device based on the use PreBSR parameter in the third configuration message. The pre-emptive BSR mechanism is a mechanism in which a UE sends a pre-emptive BSR to a network device to obtain a Uu transmission resource.

602: The first terminal device determines a second configuration message based on the first configuration message.

The first terminal device determines, from one or more of the correspondence between the LCH and the LCG, the LCH identifier, the bearer identifier, the LCG identifier, the data volume threshold, and the timer duration that are included in the first configuration message, content included in the second configuration message. The second configuration message includes one or more of the correspondence between the LCH and the LCG, the LCH identifier, the bearer identifier, and the LCG identifier.

For example, if the first configuration message includes the correspondence between the LCH and the LCG and the LCG identifier, it is determined that the second configuration message includes the correspondence between the LCH and the LCG and the LCG identifier. If the first configuration message includes the correspondence between the LCH and the LCG, and the LCG identifier, and further includes the data volume threshold and/or the timer duration, it is determined that the second configuration message includes the correspondence between the LCH and the LCG and the LCG identifier. If the first configuration message includes the LCH identifier, it is determined that the second configuration message includes the LCH identifier. If the second configuration message includes the LCH identifier, and further includes the data volume threshold and/or the timer duration, it is determined that the second configuration message includes the LCH identifier.

603: The first terminal device sends the second configuration message to the second device.

604: The first terminal device determines, based on the first configuration message, to send indication information to the second device, where the indication information includes data volume information of to-be-transmitted data on a sidelink.

The first terminal determines, based on the first configuration message, to send the indication information to the second device. For example, the first configuration message includes the LCH identifier, indicating that the indication information may include data volume information of specific LCHs. In an example, the first configuration message includes an LCH1 and an LCH2. In this case, when the first terminal device sends the indication information to the second device, an indication message carries data volume information of to-be-transmitted data on the LCH1 and the LCH2.

In another example, the first configuration message includes the LCG identifier, indicating the indication information may include information about specific LCGs. For example, the first configuration message includes an LCG1 and an LCG2. In this case, when the first terminal device sends the indication information to the second device, an indication message carries data volume information of to-be-transmitted data on the LCG1 and the LCG2.

In still another example, the first configuration message includes the correspondence between the LCH and the LCG. For example, an LCG1 corresponds to an LCH1, an LCH2, and an LCH3. In this case, after receiving the first configuration message, the first terminal device allocates the LCH1, the LCH2, and the LCH3 to the LCG1 based on the first configuration message. When the first terminal device sends the indication information to the second device, if there is to-be-transmitted data on the LCH1, the LCH2, and the LCH3, an indication message carries data volume information of to-be-transmitted data on the LCG1.

In still another example, the first configuration message includes the LCH identifier/LCG identifier/bearer identifier that may trigger the first terminal device to send the indication information. For example, the first configuration message includes: an LCH1 and an LCH2. In this case, after receiving the first configuration message, the first terminal device triggers sending of the indication information to the second device when there is to-be-transmitted data on the LCH1 or the LCH2. It should be noted that the first terminal device triggers sending of the indication information to the second device means that the first terminal device may or needs to send the indication information to the second device, instead of sending the indication information to the second device. Specifically, the first terminal device further needs to generate the indication information and send the indication information to the second device only when there is an available transmission resource (to be specific, a transmission resource for transmitting the indication information to the second device).

In still another example, the first configuration message includes the data volume threshold and the LCH identifier/LCG identifier/bearer identifier, indicating that when a volume of to-be-transmitted data on an LCH indicated by the LCH identifier/an LCG indicated by the LCG identifier/a bearer indicated by the bearer identifier exceeds an indicated data volume threshold, the first terminal device may trigger sending of the indication information to the second device. For example, if the first configuration information includes a data volume threshold X bytes and an LCH1 identifier/LCG1 identifier, in this case, when a volume of to-be-transmitted data of the first terminal device on the LCH1 or LCG1 is greater than or equal to X bytes, the first terminal device triggers sending of the indication information to the second device.

In still another example, the first configuration message includes timer duration T. In this case, after sending first indication information to the second device, the first terminal device starts a timer. When the timer is running, the first terminal device does not send second indication information to the second device, and may send the indication information to the second device only after the timer expires. In other words, an interval between time at which the first terminal device sends the first indication information to the second device and time at which the first terminal device sends the second indication information to the second device is greater than or equal to the timer duration T. A specific value of the timer duration T may be obtained through calculation by a developer based on an experimental scenario, and may be correspondingly adjusted based on a specific application scenario in the future, or may be dynamically adjusted by the first terminal device based on quality of service information or a load status (for example, channel busy ratio information) of an LCH or LCG. This is not specifically limited in this application.

In still another example, the first terminal device may reuse an existing trigger condition of an SL-BSR as a trigger condition for triggering sending of the indication information to the second device, for example, reuse trigger conditions/a trigger condition of a regular SL-BSR and/or a periodic SL-BSR. To be specific, when new data arrives at the first terminal device, and a priority of an LCH to which the new data belongs is higher than a priority of another LCH having to-be-transmitted data. Alternatively, when there is no other LCH having to-be-transmitted data currently, the first terminal device is triggered to send the indication information to the second device, where the indication information includes data volume information of the new data.

605: The first terminal device sends the indication information to the second device.

The first terminal device sends, to the second device, the indication information determined based on the first configuration message.

In an application scenario, after generating or sending the indication information, the first terminal device may cancel triggered indication information. For example, when sending the to-be-transmitted data to the second device by using the transmission resource, the first terminal device may cancel the indication information that has been triggered by the first terminal device. In other words, when transmitting the to-be-transmitted data corresponding to the data volume information in the indication information, the first terminal device does not trigger sending of the indication information to the second device again.

606: The second device receives the indication information sent by the first terminal device, and sends a pre-emptive buffer status report to the third communication device, where the pre-emptive buffer status report includes the data volume information of the to-be-transmitted data.

After receiving the indication information sent by the first terminal device, the second device sends a pre-emptive BSR to the third communication device based on the data volume information of the to-be-transmitted data in the indication information. In other words, the pre-emptive BSR carries the data volume information of the to-be-transmitted data.

607: The third communication device receives the pre-emptive buffer status report, and allocates a target resource (namely, a Uu transmission resource corresponding to a Uu interface) to the second device based on the data volume information of the to-be-transmitted data.

After receiving the pre-emptive BSR, the third communication device allocates the target resource (in other words, the Uu transmission resource corresponding to the Uu interface) to the second device based on the data volume information of the to-be-transmitted data that is carried in the pre-emptive BSR.

608: The second device receives the to-be-transmitted data sent by the first terminal device.

After sending an indication message to the second device, the first terminal device sends the to-be-transmitted data to the second device. After receiving the pre-emptive BSR sent by the second device, the third communication device allocates the target resource to the second device based on the data volume information of the to-be-transmitted data carried in the pre-emptive BSR. A sequence of time at which the second device receives the to-be-transmitted data and time at which the second device receives the target resource is not specifically limited.

In a possible implementation, the indication information further includes auxiliary information, where the auxiliary information includes one or more of load status information of a physical channel on the sidelink, transmission time information corresponding to the to-be-transmitted data, and a delay budget corresponding to the to-be-transmitted data. For example, the auxiliary information may be used by the second device to determine time for obtaining the target resource.

The load status information of the physical channel may be as follows: If detecting that load of the transmission channel exceeds an overload threshold, the first terminal device determines that the load status information of the physical channel is channel congestion. If detecting that load of the physical channel is less than or equal to an overload threshold, the first terminal device determines that the load status information of the physical channel is channel unblocked. Alternatively, the load status information of the physical channel may be a channel busy status, for example, a channel busy ratio (channel busy ratio, CBR). The transmission time information corresponding to the to-be-transmitted data may be a time value in a unit of ms/us/slot/symbol, for example, may be calculated by the first terminal device based on the data volume information of the to-be-transmitted data and a transmission rate of the physical channel. For example, the transmission time information corresponding to the to-be-transmitted data may be represented by a ratio of the data volume information of the to-be-transmitted data to the transmission rate of the physical channel. Alternatively, when the first terminal device obtains a resource in mode 2, the transmission time information corresponding to the to-be-transmitted data may be time used from time at which the first terminal device generates a data packet to time at which the first terminal device reserve a transmission resource, time required from time at which the first terminal device generates a data packet to time at which the first terminal device starts or completes data transmission by using a reserved resource, or the like. The delay budget is a total delay budget of a data packet of to-be-transmitted data, for example, a delay requirement for transmitting the data packet from the first terminal device to the third communication device, or remaining time information of the to-be-transmitted data packet.

In this embodiment, because the third communication device is a network device (or an access network device), a first terminal sends the indication information to a second terminal. The second device determines, based on the auxiliary information in the indication information, the time for obtaining the target resource. In other words, the second device may determine, based on the auxiliary information in the indication information, time for triggering and/or sending the pre-emptive BSR to the third communication device.

For example, the indication information includes the load status information of the physical channel, where the load status information includes channel congestion or channel unblocked, channel busy ratio information, or the like. When the channel is congested, corresponding preset duration for obtaining the target resource is 100 ms. When the channel is unblocked, corresponding preset duration for obtaining the target resource is 50 ms. In this case, if the load status information of the physical channel is channel congestion, the second device starts timing after receiving the indication information sent by the first terminal device, and when 100 ms arrives, the second terminal sends the pre-emptive BSR to the third communication device to obtain the target resource. If the load status information of the physical channel is channel unblocked, the second device starts timing after receiving the indication information sent by the first terminal device, and when 50 ms arrives, the second terminal sends the pre-emptive BSR to the third communication device to obtain the target resource.

For example, the indication information includes the transmission time information corresponding to the to-be-transmitted data. It is assumed that the developer may obtain, through calculation by using experimental data, that duration in which the third communication device allocates the target resource to the second device after receiving the pre-emptive BSR is 30 ms. The first terminal device sends the indication information to the second device, where the transmission time information corresponding to the to-be-transmitted data included in the indication information is 100 ms. In this case, the second device may start timing after receiving the indication information sent by the first terminal device, and when 70 ms arrives, the second terminal sends the pre-emptive BSR to the third communication device to obtain the target resource.

For example, the indication information includes the delay budget. It is assumed that the developer may obtain, through calculation by using experimental data, that duration in which the third communication device allocates the target resource to the second device after receiving the pre-emptive BSR is 30 ms. The first terminal device sends the indication information to the second device, where the delay budget included in the indication information is 80 ms. In this case, after the second device receives the indication information sent by the first terminal device, the second terminal needs to send the pre-emptive BSR to the third communication device within at least 50 ms, to obtain the target resource.

609: The second device transmits, to the third communication device (the network device) by using the target resource, data (namely, the to-be-transmitted data) received from the sidelink.

After obtaining the target resource and the to-be-transmitted data, the second terminal transmits, to the third communication device (the network device) by using the target resource, the data received from the sidelink.

It can be learned that, by implementing the resource scheduling method described in the embodiment in FIG. 6, the third communication device is a network device, and the first terminal receives the first configuration message sent by the third communication device, and determines, based on the first configuration message, to send the indication information to the second device. The first terminal device determines the second configuration message based on the first configuration message, and sends the second configuration message to the second terminal. In this way, the first terminal device can send the indication information to the second device, and the second device obtains the target resource in advance based on the data volume information of the to-be-transmitted data in the indication information, and transmits the to-be-transmitted data to the third communication device by using the target resource. By using the method, a communication coverage area of the network device (the third communication device in this embodiment) is increased, and a relay delay is reduced when a relay device (the second device) forwards data.

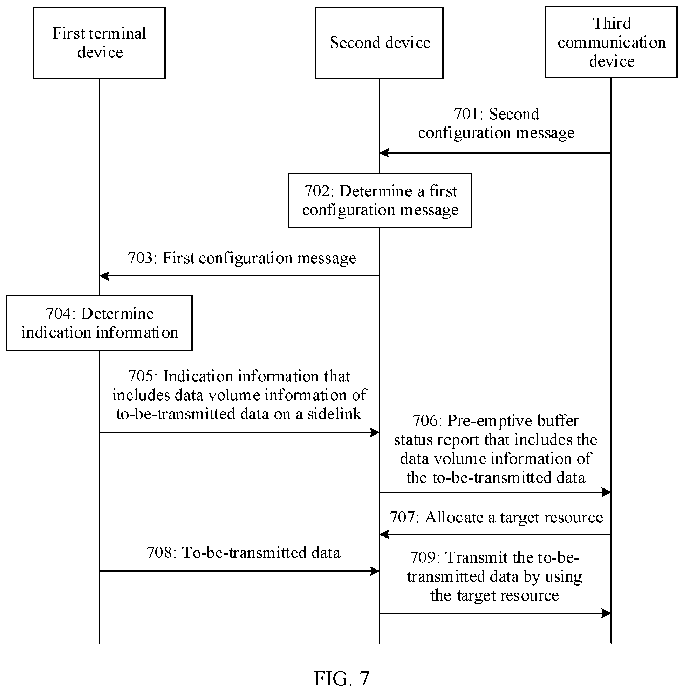

FIG. 7 is a schematic flowchart of another resource scheduling method in a scenario in which a remote device communicates with a network device according to an embodiment of this application. The scenario in which the remote device communicates with the network device is shown in FIG. 5a. A third communication device is a network device 503, a first terminal device is a remote device 501, and a second device is a relay device 502. There is a sidelink between the remote device 501 and the relay device 502, and there is a connection between the relay device 502 and the network device 503. The resource scheduling method includes the following steps shown in FIG. 7.

701: The second device receives a second configuration message sent by the third communication device.

The second configuration message includes one or more of a correspondence between an LCH and an LCG, an LCH identifier, a bearer identifier, an LCG identifier, a data volume threshold, and timer duration.

In a possible implementation, before the second device receives the second configuration message sent by the third communication device, the first terminal device sends first information to the third communication device, where the first information includes information about a capability of the first terminal device to support sending of the indication information. The third communication device receives the first information sent by the first terminal device, and sends the second configuration message to the second device when determining, based on the first information, that the first terminal device has the capability of supporting sending of the indication information.

In a possible implementation, the second device receives a third configuration message, where the third configuration message includes an activated parameter for a pre-emptive buffer status report (pre-emptive BSR) mechanism, for example, a use PreBSR parameter. Further, the second device may activate a pre-emptive BSR mechanism of the second device based on the use PreBSR parameter in the third configuration message. The pre-emptive BSR mechanism is a mechanism in which a UE sends a pre-emptive BSR to a network device to obtain a Uu transmission resource. It should be known that the third configuration message may be the second configuration message or another configuration message other than the second configuration message. This is not specifically limited in this application.

702: The second device determines a first configuration message based on the second configuration message, and sends the first configuration message to the first terminal device.

The first configuration message is used by the first terminal device to determine to send indication information to the second device. The first configuration message includes one or more of the correspondence between the LCH and the LCG, the LCH identifier, the bearer identifier, the LCG identifier, the data volume threshold, and the timer duration.

The second device determines, from one or more of the correspondence between the LCH and the LCG, the LCH identifier, the bearer identifier, the LCG identifier, the data volume threshold, and the timer duration that are included in the second configuration message, content included in the first configuration message. In this case, the content included in the first configuration message is consistent with content included in the second configuration message. To be specific, the second configuration message includes the correspondence between the LCH and the LCG and the LCG identifier. In this case, the second device determines that the first configuration message includes the correspondence between the LCH and the LCG and the LCG identifier. If the second configuration message includes the correspondence between the LCH and the LCG, the LCG identifier, the data volume threshold, and the timer duration, the second device determines that the first configuration message includes the correspondence between the LCH and the LCG, the LCG identifier, the data volume threshold, and the timer duration. If the second configuration message includes the LCH identifier, the second device determines that the first configuration message includes the LCH identifier. If the second configuration message includes the LCH identifier, the data volume threshold, and the timer duration, the second device determines that the first configuration message includes the LCH identifier, the data volume threshold, and the timer duration.

703: The second device sends the first configuration message to the first terminal device.

A second terminal sends the first configuration message determined based on the second configuration message to the first terminal device.

704: After receiving the first configuration message, the first terminal device determines, based on the first configuration message, to send indication information to the second device, where the indication information includes data volume information of to-be-transmitted data on a sidelink.

705: The first terminal device sends the indication information to the second device.

706: The second device receives the indication information sent by the first terminal device, and sends a pre-emptive buffer status report to the third communication device, where the pre-emptive buffer status report includes the data volume information of the to-be-transmitted data.

707: The third communication device receives the pre-emptive buffer status report, and allocates a target resource (namely, a Uu transmission resource corresponding to a Uu interface) to the second device based on the data volume information of the to-be-transmitted data.

708: The second device receives the to-be-transmitted data sent by the first terminal device.

709: The second device transmits the to-be-transmitted data to the third communication device (a network device) by using the target resource (to be specific, resource received by the second device from the sidelink).

For specific implementations of step 704 to step 709, refer to the specific implementations of step 604 to step 609 in the foregoing embodiment. Details are not described herein again.

It can be learned that, by implementing the resource scheduling method described in the embodiment in FIG. 7, the third communication device is a network device, and the second terminal receives the second configuration message sent by the third communication device, and determines, based on the second configuration message, to send the indication information to the first terminal device. The first terminal device determines, based on the first configuration message, to send the indication information to the second device. Further, the second device receives the indication information, obtains the target resource based on the data volume information of the to-be-transmitted data in the indication information, and transmits the to-be-transmitted data to the third communication device by using the target resource. By using the method, a communication coverage area of the network device (the third communication device in this embodiment) is increased, and a relay delay is reduced when a relay device (the second device) forwards data.

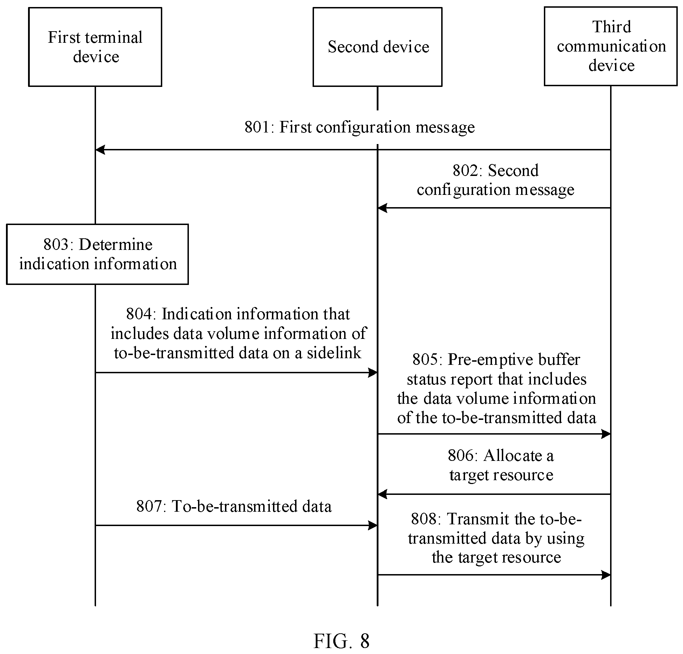

FIG. 8 is a schematic flowchart of still another resource scheduling method in a scenario in which a remote device communicates with a network device according to an embodiment of this application. The scenario in which the remote device communicates with the network device is shown in FIG. 5a. A third communication device is a network device 503, a first terminal device is a remote device 501, and a second device is a relay device 502. There is a sidelink between the remote device 501 and the relay device 502, and there is a connection between the relay device 502 and the network device 503. The resource scheduling method includes the following steps shown in FIG. 8.

801: The first terminal device receives a first configuration message sent by the third communication device.

For a specific implementation process of step 801, refer to the specific implementation process of step 601 in the foregoing embodiment. Details are not described herein again.

802: The second device receives a second configuration message sent by the third communication device.

For a specific implementation process of step 801, refer to the specific implementation process of step 701 in the foregoing embodiment. Details are not described herein again.

803: The first terminal device determines, based on the first configuration message, to send indication information to the second device, where the indication information includes data volume information of to-be-transmitted data on a sidelink.

804: The first terminal device sends the indication information to the second device.

805: The second device receives the indication information sent by the first terminal device, and sends a pre-emptive buffer status report to the third communication device, where the pre-emptive buffer status report includes the data volume information of the to-be-transmitted data.

806: The third communication device receives the pre-emptive buffer status report, and allocates a target resource (namely, a Uu transmission resource corresponding to a Uu interface) to the second device based on the data volume information of the to-be-transmitted data.

807: The second device receives the to-be-transmitted data sent by the first terminal device.

808: The second device transmits the to-be-transmitted data (to be specific, data received by the second device from the sidelink) to the third communication device (a network device) by using the target resource.

For specific implementations of step 803 to step 808, refer to the specific implementations of step 604 to step 609 or step 704 to step 709 in the foregoing embodiments. Details are not described herein again.

It can be learned that, by implementing the resource scheduling method described in FIG. 8 in the embodiment, the third communication device is a network device, and the third communication device respectively sends the second configuration message and the first configuration message to the second device and the first terminal device. The first terminal device determines, based on the first configuration message, to send the indication information to the second device. Further, the second device receives the indication information, obtains the target resource based on the data volume information of the to-be-transmitted data in the indication information, and forwards, to the third communication device by using the target resource, the data (namely, the to-be-transmitted data) received by the second device from the sidelink. By using the method, a communication coverage area of the network device (the third communication device in this embodiment) is increased, and a relay delay is reduced when a relay device (the second device) forwards data.

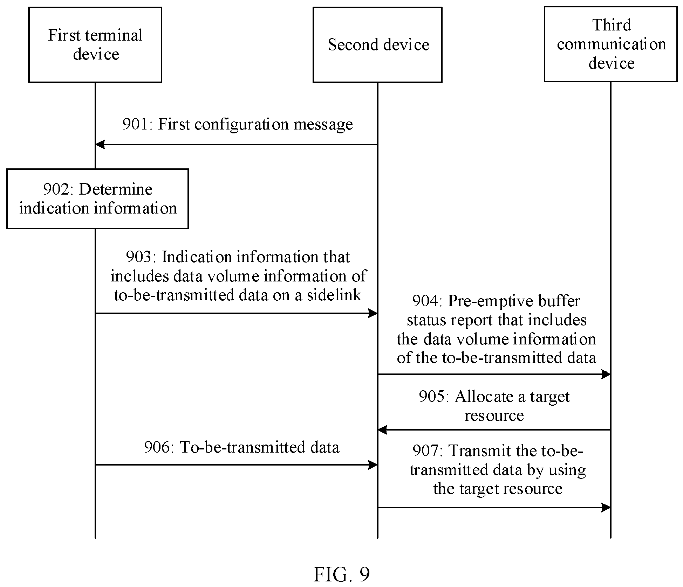

FIG. 9 is a schematic flowchart of still another resource scheduling method in a scenario in which a remote device communicates with a network device according to an embodiment of this application. The scenario in which the remote device communicates with the network device is shown in FIG. 5a. A third communication device is a network device 503, a first terminal device is a remote device 501, and a second device is a relay device 502. There is a sidelink between the remote device 501 and the relay device 502, and there is a connection between the relay device 502 and the network device 503. In addition, the second device is the relay device 502 that may be a relay device of an application layer 2 relay or relay device of an application layer 3. The resource scheduling method includes the following steps shown in FIG. 9.

901: The first terminal device receives a first configuration message sent by the second device.

The first configuration message includes one or more of a correspondence between an LCH and an LCG, an LCH identifier, a bearer identifier, an LCG identifier, a data volume threshold, and timer duration.

In a feasible implementation, the first terminal device sends quality of service information of the LCH to the second device. A second terminal determines the first configuration message based on the quality of service information of the LCH, where the first configuration message is used by the first terminal device to determine to send indication information to the second device.

The quality of service (quality of service, QoS) information of the LCH refers to a quality of service requirement that needs to be guaranteed for service data carried on the logical channel, and correspondingly includes a set of metrics that includes one or more factors such as a priority, service availability, a delay, a delay jitter, a throughput, a bit error rate, a packet loss rate, and the like, and that may be quantified as a level. For example, the second device may sort, by QoS information level, LCHs based on QoS information of an LCH1, an LCH2, and an LCH3 reported by the first terminal device, and the LCHs are sequentially the LCH2, the LCH1, and the LCH3. In this case, the second device may use the LCH2 with a high QoS information level to configure the first configuration message. In other words, the first configuration message configured by the second device includes an LCH2 identifier.

In a possible implementation, before receiving the first configuration message sent by the second device, the first terminal device sends first information to the second device, where the first information includes information about a capability of the first terminal device to support sending of the indication information. The second device receives the first information sent by the first terminal device, and sends a second configuration message to the first terminal device when determining, based on the first information, that the first terminal device has the capability of supporting sending of the indication information.

In a possible implementation, the second device receives a third configuration message, where the third configuration message includes an activated parameter for a pre-emptive BSR mechanism, for example, a use PreBSR parameter. Further, the second device may activate a pre-emptive BSR mechanism of the second device based on the use PreBSR parameter in the third configuration message. The pre-emptive BSR mechanism is a mechanism in which a UE sends a pre-emptive BSR to a network device to obtain a Uu transmission resource.

902: The first terminal device determines, based on the first configuration message, to send indication information to the second device, where the indication information includes data volume information of to-be-transmitted data on a sidelink.

903: The first terminal device sends the indication information to the second device.

904: The second device receives the indication information sent by the first terminal device, and sends a pre-emptive buffer status report to the third communication device, where the pre-emptive buffer status report includes the data volume information of the to-be-transmitted data.

905: The third communication device receives the pre-emptive buffer status report, and allocates a target resource (namely, a Uu transmission resource corresponding to a Uu interface) to the second device based on the data volume information of the to-be-transmitted data.

906: The second device receives the to-be-transmitted data sent by the first terminal device.

907: The second device transmits the to-be-transmitted data (to be specific, data received by the second device from the sidelink) to the third communication device (a network device) by using the target resource.

For specific implementations of step 902 to step 907, refer to the specific implementations of step 604 to step 609 in the foregoing embodiment. Details are not described herein again.

It can be learned that, by implementing the resource scheduling method described in FIG. 9 in this embodiment, a relay delay can be reduced when the relay device is a layer 2 relay device, and a scenario in which the relay device is a layer 3 relay device and the network device cannot configure the first configuration message for the remote device can be resolved. This expands an application scenario of the relay device, reduces a limitation on the relay device, and improves an application scope of the relay device.

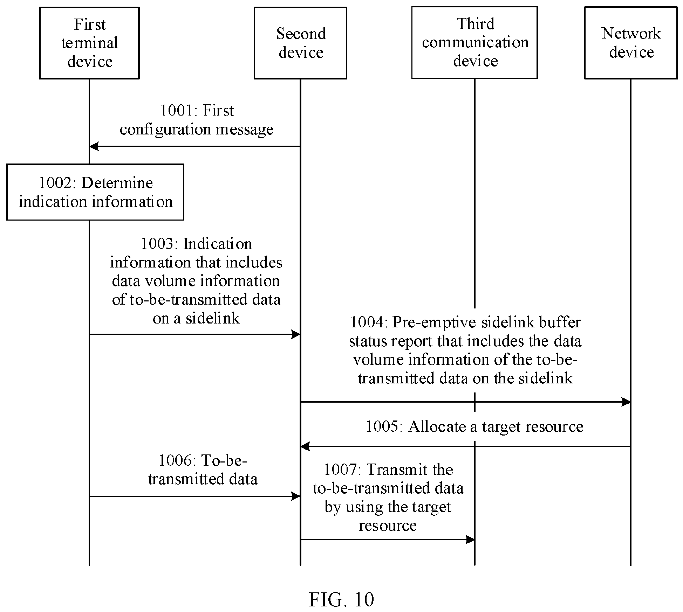

FIG. 10 is a schematic flowchart of a resource scheduling method in a scenario in which a remote device communicates with a remote device according to an embodiment of this application. The scenario in which the remote device communicates with the remote device is shown in FIG. 5b. A third communication device is a network device 506, a first terminal device is a remote device 504, and a second device is a relay device 505. There is a sidelink between the remote device 504 and the relay device 505, there is a connection between the relay device 505 and the remote device 506, and the relay device 505 is in a connected state (in other words, connected to a network device) and obtains a transmission resource in mode 1. The resource scheduling method includes the following steps shown in FIG. 10.

1001: The first terminal device receives a first configuration message sent by the second device.

The first configuration message includes one or more of a correspondence between an LCH and an LCG, an LCH identifier, a bearer identifier, an LCG identifier, a data volume threshold, and timer duration.

In a possible implementation, the first terminal device sends a mapping relationship between LCHs to the second device. A second terminal determines the first configuration message based on the mapping relationship between the LCHs, where the first configuration message is used by the first terminal device to determine to send indication information to the second device.

The mapping relationship between LCHs is a mapping relationship between an LCH on a sidelink 1 (a sidelink between the remote device 506 and the relay device 505) and an LCH on a sidelink 2 (a sidelink between the remote device 504 and the relay device 505). For example, if an LCH1 and an LCH2 on the sidelink 1 between the relay device 505 and the remote device 506 belong to an LCG1, an LCH1 and an LCH2 on the sidelink 2 between the remote device 504 and the relay device 505 also need to belong to an LCG1. In other words, the first configuration message determined by the second terminal carries a correspondence between the LCG1 and the LCH1 and the LCH2.

In a possible implementation, before receiving the first configuration message sent by the second device, the first terminal device sends first information to the second device, where the first information includes information about a capability of the first terminal device to support sending of the indication information. The second device receives the first information sent by the first terminal device, and sends a second configuration message to the first terminal device when determining, based on the first information, that the first terminal device has the capability of supporting sending of the indication information. For example, the first information carries a first parameter. For example, if the first information carries a parameter supportSL-BSI, it indicates that the first terminal device supports sending of the indication information. In this case, the first terminal device sends the first information to the second device. After receiving the first information, if the second device detects that the first information carries the first parameter, the second device may determine that the first terminal device has the capability of sending the indication information, and further send the first configuration message to the first terminal device. After receiving a first message, if the second device detects that the first information does not carry the first parameter, the second device may determine that the first terminal device does not have the capability of sending the indication information, and does not send the first configuration message to the first terminal device. This saves a communication transmission resource.

In a feasible implementation, the second device receives a third configuration message, where the third configuration message includes an activated parameter for a pre-emptive SL-BSR mechanism, for example, a use SL-BSR parameter. The second device may activate a pre-emptive SL-BSR mechanism of the second device based on the use SL-BSR parameter in the third configuration message. The pre-emptive SL-BSR mechanism is a mechanism in which the second device sends a pre-emptive SL-BSR to the network device to advance a sidelink transmission resource.

1002: The first terminal device determines, based on the first configuration message, to send indication information to the second device, where the indication information includes data volume information of to-be-transmitted data on a sidelink.

1003: The first terminal device sends the indication information to the second device.

For specific implementations of step 1002 and step 1003, refer to the specific implementations of step 604 and step 605 in the foregoing embodiment. Details are not described herein again.

1004: The second device receives the indication information sent by the first terminal device, and sends a pre-emptive sidelink buffer status report to the network device, where the pre-emptive sidelink buffer status report includes data volume information of to-be-transmitted data on the sidelink.

After receiving the indication information sent by the first terminal device, the second device sends the pre-emptive sidelink buffer status report (pre-emptive SL-BSR) to the network device based on the data volume information of the to-be-transmitted data in the indication information. In other words, the pre-emptive SL-BSR carries the data volume information of the to-be-transmitted data.

For example, the pre-emptive SL-BSR may be transmitted in a MAC CE manner, and may include one or more of identification information of the first terminal device, identification information of the second device, identification information of a remote device (a third communication device), the LCG identifier, to-be-transmitted data volume information corresponding to the LCG, the LCH identifier, and to-be-transmitted data volume information corresponding to the LCH. Identification information of a device may be a layer 1 destination identifier, a layer 2 destination identifier of the device, or other identification information that can identify the device. This is not limited in specific implementation.

In a possible implementation, the pre-emptive SL BSR further includes auxiliary information, where the auxiliary information includes one or more of load status information of a physical channel, transmission time information corresponding to the to-be-transmitted data, and a delay budget corresponding to the to-be-transmitted data. For example, the auxiliary information may be used by the second device to determine time for obtaining the target resource. The load status information of the physical channel may be as follows: If detecting that load of the channel exceeds an overload threshold, the first terminal device determines that the load status information of the physical channel is channel congestion. If detecting that load of the channel is less than or equal to an overload threshold, the first terminal device determines that the load status information of the physical channel is channel unblocked. Alternatively, the load status information of the physical channel may be a channel busy status, for example, a channel busy ratio. The transmission time information corresponding to the to-be-transmitted data may be a time value in a unit of ms/µs/slot/symbol, for example, may be calculated by the first terminal device based on the data volume information of the to-be-transmitted data and a transmission rate of the channel. For example, the transmission time information corresponding to the to-be-transmitted data may be represented by a ratio of the data volume information of the to-be-transmitted data to the transmission rate of the channel. Alternatively, when the first terminal device obtains a resource in mode 2, the transmission time information corresponding to the to-be-transmitted data may be a time interval from time at which the first terminal device reserves a transmission resource to time at which the first terminal device performs data transmission by using the transmission resource, time required from time at which the first terminal device generates a data packet to time at which the first terminal device starts or completes data transmission by using a reserved resource, or the like. The delay budget is a total delay budget of a data packet of to-be-transmitted data, for example, a delay requirement for transmitting the data packet from the first terminal device to the remote device, or remaining time information of the to-be-transmitted data packet.

In this embodiment, the second device may determine, based on the auxiliary information in the indication information, time for sending the pre-emptive SL-BSR to the network device.

For example, the indication information includes the load status information of the physical channel, where the load status information includes channel congestion, channel unblocked, or channel busy ratio information. When the channel is congested, corresponding preset duration for obtaining the target resource is 100 ms. When the channel is unblocked, corresponding preset duration for obtaining the target resource is 50 ms. In this case, if the load status information of the physical channel is channel congestion, the second device starts timing after receiving the indication information sent by the first terminal device, and when 100 ms arrives, the second device sends the pre-emptive SL-BSR to the network device to obtain the target resource. If the load status information of the physical channel is channel unblocked, the second device starts timing after receiving the indication information sent by the first terminal device, and when 50 ms arrives, the second terminal sends the pre-emptive SL-BSR to the network device to obtain the target resource.

For example, the indication information includes the transmission time information corresponding to the to-be-transmitted data. It is assumed that a developer obtains, through calculation by using experimental data, that duration in which the network device allocates the target resource to the second device after receiving the pre-emptive SL-BSR is 30 ms. The first terminal device sends the indication information to the second device. The transmission time information corresponding to the to-be-transmitted data included in the indication information is 100 ms. In this case, the second device may start timing after receiving the indication information sent by the first terminal device, and when 70 ms arrives, the second device sends the pre-emptive SL-BSR to the network device to obtain the target resource.

For example, the indication information includes the delay budget. It is assumed that a developer may obtain, through calculation by using experimental data, that duration in which the network device allocates the target resource to the second device after receiving the pre-emptive SL-BSR is 30 ms. The first terminal device sends the indication information to the second device, where the delay budget included in the indication information is 80 ms. In this case, the second device may start timing after receiving the indication information sent by the first terminal device, and when 50 ms arrives, the second terminal sends the pre-emptive SL-BSR to the network device to obtain the target resource.

1005: The second device receives the target resource (namely, a sidelink transmission resource) allocated by the network device based on the data volume information of the to-be-transmitted data on the sidelink.

The network device allocates the target resource to the second device based on the data volume information of the to-be-transmitted data carried in the pre-emptive SL-BSR.

1006: The second device receives the to-be-transmitted data sent by the first terminal device.

After sending an indication message to the second device, the first terminal device sends the to-be-transmitted data to the second device. After receiving the pre-emptive SL-BSR sent by the second device, the network device allocates the target resource (namely, the sidelink transmission resource) to the second device based on the data volume information of the to-be-transmitted data carried in the pre-emptive SL-BSR. A sequence of time at which the second device receives the to-be-transmitted data and time at which the second device receives the target resource is not specifically limited.

1007: The second device transmits the to-be-transmitted data (to be specific, data received by the second device from the sidelink) to the third communication device (another remote device) by using the target resource.

After obtaining the target resource and the to-be-transmitted data, the second terminal transmits the to-be-transmitted data to the third communication device (the network device) by using the target resource.

It can be learned that, by implementing the resource scheduling method described in the embodiment in FIG. 10, the third communication device is the remote device. When the second device (the relay device) is in the connected state, the second device sends the pre-emptive SL-BSR, so that the network device allocates the sidelink transmission resource to the second device. Further, a relay forwarding delay in a sidelink communication scenario is reduced.

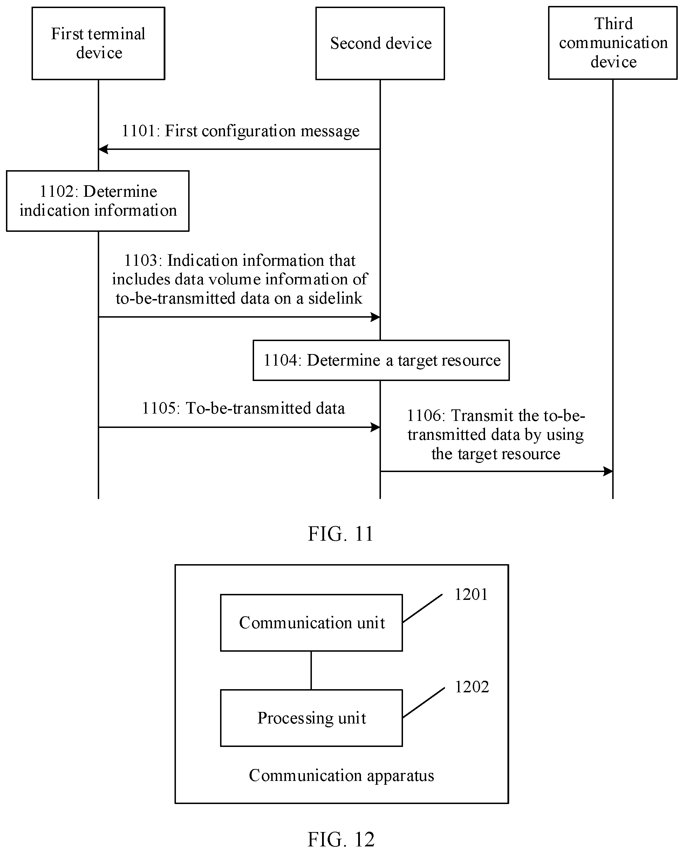

FIG. 11 is a schematic flowchart of another resource scheduling method in a scenario in which a remote device communicates with a remote device according to an embodiment of this application. The scenario in which the remote device communicates with the remote device is shown in FIG. 5c. A third communication device is a remote device 509, a first terminal device is a remote device 507, and a second device is a relay device 508. There is a sidelink between the remote device 507 and the relay device 508, there is a connection between the relay device 508 and the remote device 509, and the relay device 508 obtains a transmission resource in mode 2. The resource scheduling method includes the following steps shown in FIG. 11.

1101: The first terminal device receives a first configuration message sent by the second device.

1102: The first terminal device determines, based on the first configuration message, to send indication information to the second device, where the indication information includes data volume information of to-be-transmitted data on a sidelink.

1103: The first terminal device sends the indication information to the second device.

For specific implementations of step 1101 to step 1102, refer to the specific implementations of step 1001 to step 1003 in the foregoing embodiment. Details are not described herein again.

1104: The second device receives the indication information sent by the first terminal device, and determines a target resource (namely, a sidelink resource) from an available sidelink resource pool based on the data volume information of the to-be-transmitted data on the sidelink.

After receiving the indication information sent by the first terminal device, the second device may trigger, based on the data volume information of the to-be-transmitted data in the indication information, a resource selection or resource reselection process, for example, reserve, from a resource pool configured by the second device, the target resource (namely, the sidelink resource) for transmitting the to-be-transmitted data.

For example, when successfully parsing the indication information sent by the first terminal device, the second device is triggered to reserve the target resource. It should be known that, even if the second device has no to-be-transmitted data for the remote device (to be specific, the remote device has not transmitted the to-be-transmitted data to the second device, and only sends, to the second device, the indication information indicating the data volume information of the to-be-transmitted data), or when receiving the indication information, the second device determines, based on the data volume information in the indication information, that the resource currently reserved by the second device is enough to transmit the currently received to-be-forwarded data (namely, the to-be-transmitted data). The second device also triggers reservation of the target resource.

In another example, when successfully parsing the indication information sent by the first terminal device and finding (or determining), based on the data volume information in the indication information, that the transmission resource currently reserved by the second device cannot meet a delay budget of the to-be-transmitted data of the first terminal device, the second device may trigger the resource reselection process (in other words, redetermine the target resource).

In a possible implementation, the indication information further includes auxiliary information, where the auxiliary information includes one or more of load status information of a physical channel, transmission time information corresponding to the to-be-transmitted data, and the delay budget corresponding to the to-be-transmitted data. For example, the auxiliary information may be used by the second device to determine time for obtaining the target transmission resource.

The load status information of the physical channel may be as follows: If detecting that load of the transmission channel exceeds an overload threshold, the first terminal device determines that the load status information of the physical channel is channel congestion. If detecting that load of the channel is less than or equal to an overload threshold, the first terminal device determines that the load status information of the physical channel is channel unblocked. Alternatively, the load status information of the physical channel may be a channel busy status, for example, a channel busy ratio (channel busy ratio, CBR). The transmission time information corresponding to the to-be-transmitted data may be a time value in a unit of ms/us/slot/symbol, for example, may be calculated by the first terminal device based on the data volume information of the to-be-transmitted data and a transmission rate of the channel. For example, the transmission time information corresponding to the to-be-transmitted data may be represented by a ratio of the data volume information of the to-be-transmitted data to the transmission rate of the channel. Alternatively, when the first terminal device obtains a resource in mode 2, the transmission time information corresponding to the to-be-transmitted data may be time used from time at which the first terminal device determines to reserve the target resource to time at which the first terminal device forwards (or transmits) data by using the target resource, time required from time at which the first terminal device generates a data packet to time at which the first terminal device starts or completes data transmission by using the reserved target resource, or the like. The delay budget is a total delay budget of a data packet of to-be-transmitted data, for example, a delay requirement for transmitting the data packet from the first terminal device to the third communication device, or remaining time information of the to-be-transmitted data packet.

In this embodiment, the second device may determine, based on the auxiliary information in the indication information, the time for obtaining the target resource from the resource pool.

For example, the indication information includes the load status information of the physical channel, where the load status information includes channel congestion or channel unblocked, channel busy ratio information, or the like. When the channel is congested, the corresponding time for obtaining the target resource is 70 ms. When the channel is unblocked, the corresponding time for obtaining the target resource is 30 ms. In this case, if the load status information of the physical channel is channel congestion, the second device starts timing after receiving the indication information sent by the first terminal device, and when 70 ms arrives, the second device obtains the target resource from the resource pool. If the load status information of the physical channel is channel unblocked, the second device starts timing after receiving the indication information sent by the first terminal device, and when 30 ms arrives, the second terminal obtains the target resource from the resource pool.

For example, the indication information includes the transmission time information corresponding to the to-be-transmitted data. It is assumed that a developer obtains, through calculation by using experimental data, that duration in which the second device obtains the target resource from the resource pool after receiving an indication message is 20 ms. The first terminal device sends the indication information to the second device, where the transmission time information corresponding to the to-be-transmitted data included in the indication information is 100 ms. In this case, the second device may start timing after receiving the indication information sent by the first terminal device, and when 80 ms arrives, the second device obtains the target resource from the resource pool.

For example, the indication information includes the delay budget. It is assumed that a developer obtains, through calculation by using experimental data, that duration in which the second device obtains the target resource from the resource pool after receiving an indication message is 20 ms. The first terminal device sends the indication information to the second device, where the delay budget included in the indication information is 80 ms. In this case, after receiving the indication information sent by the first terminal device, the second device needs to obtain the target resource from the resource pool within at least 60 ms.

1105: The second device receives the to-be-transmitted data sent by the first terminal device.

After sending the indication message to the second device, the first terminal device sends the to-be-transmitted data to the second device.

1106: The second device transmits the to-be-transmitted data (to be specific, data received by the second device from the sidelink) to the third communication device (another remote device) by using the target resource.

After obtaining the target resource and the to-be-transmitted data, the second terminal transmits the to-be-transmitted data to the third communication device (the network device) by using the target resource.

It can be learned that, by implementing the resource scheduling method described in the embodiment in FIG. 11, when the third communication device is the remote device (the third terminal device), the second device determines the first configuration message based on the first information sent by the first terminal device. The first terminal device determines, based on the first configuration message, to send the indication information to the second device. The second device obtains the target resource from the resource pool based on the data volume information of the to-be-transmitted data in the indication information, and further transmits the to-be-transmitted data to the third communication device by using the target resource. This reduces a relay delay when the relay device (the second device) forwards data.

It should be noted that in a specific implementation, some steps in the figure may be selected for implementation, or a sequence of the steps in the figure may be adjusted for implementation. This is not limited in this application. It should be understood that performing some steps in the figure or adjusting a sequence of the steps for specific implementation shall fall within the protection scope of this application.

FIG. 12 is a schematic diagram of a structure of a communication apparatus according to an embodiment of this application. The communication apparatus shown in FIG. 12 may be configured to implement some or all functions of the first terminal device in embodiments corresponding to the foregoing resource scheduling methods. The communication apparatus shown in FIG. 12 may be configured to implement some or all functions of the first terminal device in the method embodiments described in FIG. 3 to FIG. 11. The apparatus may be a first terminal device, an apparatus in a first terminal device, or an apparatus that can be used together with a first terminal device. The communication apparatus may alternatively be a chip system. The communication apparatus shown in FIG. 12 may include a communication unit 1201 and a processing unit 1202.

The communication unit 1201 is configured to send indication information to a second device, where the indication information includes data volume information of to-be-transmitted data on a sidelink, the data volume information of the to-be-transmitted data is used by the second device to obtain a target resource, and the target resource is used by the second device to forward, to a third communication device, data received by the second device from the sidelink.

In a possible implementation, before sending the indication information to the second device, the communication unit 1201 is further configured to receive a first configuration message; and the processing unit 1202 is configured to determine, based on the first configuration message, to send the indication information to the second device.

In a possible implementation, the first configuration message includes one or more of a correspondence between a logical channel LCH and a logical channel group LCG, an LCH identifier, a bearer identifier, an LCG identifier, a data volume threshold, and timer duration.

In a possible implementation, a manner in which the communication unit 1201 receives the first configuration message is specifically: receiving the first configuration message sent by the third communication device.

In a possible implementation, after the communication unit 1201 receives the first configuration message, the processing unit 1202 is further configured to determine a second configuration message based on the first configuration message, and the communication unit 1201 is further configured to send the second configuration message to the second device, where the second configuration message includes one or more of the correspondence between the LCH and the LCG, the LCH identifier, the bearer identifier, the LCG identifier, the data volume threshold, and the timer duration.

In a possible implementation, a manner in which the communication unit 1201 receives the first configuration message is specifically: receiving the first configuration message sent by the second device.

In a possible implementation, before receiving the first configuration message sent by the second device, the communication unit 1201 is further configured to send a mapping relationship between LCHs and/or quality of service information of the LCH to the second device, where the mapping relationship between the LCHs and/or the quality of service information of the LCH are/is used by the second device to determine the first configuration message.

In a possible implementation, a manner in which the communication unit 1201 determines, based on the first configuration message, to send the indication information to the second device is specifically: determining that a trigger condition is met, where the trigger condition is associated with one or more of the LCH identifier, the LCG identifier, the bearer identifier, the data volume threshold, and the timer duration; and sending, by the communication unit, the indication information to the second device.

In a possible implementation, before receiving the first configuration message, the communication unit 1201 is further configured to send first information to the third communication device or the second device, where the first information includes information about a capability of the first terminal device to support sending of the indication information.

In a possible implementation, the indication information further includes one or more of load status information of a physical channel on the sidelink, transmission time information corresponding to the to-be-transmitted data, and a delay budget corresponding to the to-be-transmitted data.

In a possible implementation, the third communication device is a network device or a third terminal device.

FIG. 12 is a schematic diagram of a structure of another communication apparatus according to an embodiment of this application. The communication apparatus shown in FIG. 12 may be configured to implement some or all functions of the second device in embodiments corresponding to the foregoing resource scheduling methods. The communication apparatus shown in FIG. 12 may be configured to implement some or all functions of the second device in the method embodiments described in FIG. 3 to FIG. 11. The apparatus may be a second device, an apparatus in a second device, or an apparatus that can be used together with a second device. The communication apparatus may alternatively be a chip system. The communication apparatus shown in FIG. 12 may include a communication unit 1201 and a processing unit 1202. The processing unit 1202 is configured to perform a data processing operation.

The communication unit 1201 is configured to receive indication information sent by a first terminal device, where the indication information includes data volume information of to-be-transmitted data on a sidelink.

The communication unit 1201 is further configured to obtain a target resource based on the data volume information of the to-be-transmitted data, where the target resource is used by the second device to forward, to a third communication device, data received by the second device from the sidelink.

In a possible implementation, before receiving the indication information sent by the first terminal device, the communication unit 1201 is further configured to receive a second configuration message, where the second configuration message includes one or more of a correspondence between a logical channel LCH and a logical channel group LCG, an LCH identifier, a bearer identifier, an LCG identifier, a data volume threshold, and timer duration.

In a possible implementation, after the communication unit 1201 receives the second configuration message, the processing unit 1202 is configured to determine a first configuration message based on the second configuration message, where the first configuration message includes one or more of the correspondence between the LCH and the LCG, the LCH identifier, the bearer identifier, the LCG identifier, the data volume threshold, and the timer duration. The communication unit 1201 is further configured to send the first configuration message to the first terminal device, where the first configuration message is used by the first terminal device to determine to send the indication information to the second device.

In a possible implementation, before receiving the indication information sent by the first terminal device, the communication unit 1201 is further configured to receive a mapping relationship between LCHs and/or quality of service information of the LCH that are/is sent by the first terminal device; the processing unit 1202 is further configured to determine a first configuration message based on the mapping relationship between the LCHs and/or the transmission quality information of the LCH; and the communication unit 1201 is further configured to send the first configuration message to the first terminal device, where the first configuration message is used by the first terminal device to determine to send the indication information to the second device.

In a possible implementation, a manner in which the communication unit 1201 receives the second configuration message is specifically: receiving the second configuration message sent by the first terminal device.

In a possible implementation, a manner in which the communication unit 1201 receives the second configuration message is specifically: receiving the second configuration message sent by the third communication device.

In a possible implementation, a manner in which the communication unit 1201 obtains the target resource based on the data volume information of the to-be-transmitted data is specifically as follows: sending a pre-emptive buffer status report to the third communication device based on the data volume information of the to-be-transmitted data, where the pre-emptive buffer status report includes the data volume information of the to-be-transmitted data, the data volume information of the to-be-transmitted data is used by the third communication device to allocate the target resource to the second device, and the target resource is used to forward the data received by the second device from the sidelink.

In a possible implementation, the indication information further includes one or more of load status information of a physical channel on the sidelink, transmission time information corresponding to the to-be-transmitted data, and a delay budget corresponding to the to-be-transmitted data.

FIG. 12 is a schematic diagram of a structure of still another communication apparatus according to an embodiment of this application. The communication apparatus shown in FIG. 12 may be configured to implement some or all functions of the third communication device in embodiments corresponding to the foregoing resource scheduling method. The communication apparatus shown in FIG. 12 may be configured to implement some or all functions of the third communication device in the method embodiments described in FIG. 3 to FIG. 11. The apparatus may be a third communication device, an apparatus in a third communication device, or an apparatus that can be used together with a third communication device. The communication apparatus may alternatively be a chip system. The communication apparatus shown in FIG. 12 may include a communication unit 1201 and a processing unit 1202.

The communication unit 1201 is configured to receive a pre-emptive buffer status report sent by a second device, where the pre-emptive buffer status report is generated after the second device receives indication information sent by a first terminal device, and the pre-emptive buffer status report includes data volume information of to-be-transmitted data on a sidelink.

The processing unit 1202 is configured to allocate a target resource to the second device based on the data volume information of the to-be-transmitted data on the sidelink, where the target resource is used by the second device to forward, to the third communication device, data received by the second device from the sidelink.

In a possible implementation, before receiving the pre-emptive buffer status report sent by the second device, the communication unit 1201 is further configured to send a first configuration message to the first terminal device, where the first configuration message is used by the first terminal device to determine to send the indication information to the second device, and the first configuration message includes one or more of a correspondence between a logical channel LCH and a logical channel group LCG, an LCH identifier, a bearer identifier, an LCG identifier, a data volume threshold, and timer duration.

In a possible implementation, before receiving the pre-emptive buffer status report sent by the second device, the communication unit 1201 is further configured to send a second configuration message to the second device, where the second configuration message includes one or more of the correspondence between the LCH and the LCG, the LCH identifier, the bearer identifier, the LCG identifier, the data volume threshold, and the timer duration.

In a possible implementation, before sending the first configuration message to the first terminal device, the communication unit 1201 is further configured to receive first information sent by the first terminal device, where the first information includes information about a capability of the first terminal device to support sending of the indication information.

A manner in which the communication unit 1201 sends the first configuration message to the first terminal device is specifically: sending the first configuration message to the first terminal device when determining, based on the first information, that the first terminal device has the capability of supporting sending of the indication information.

In a possible implementation, the third communication device is a network device.

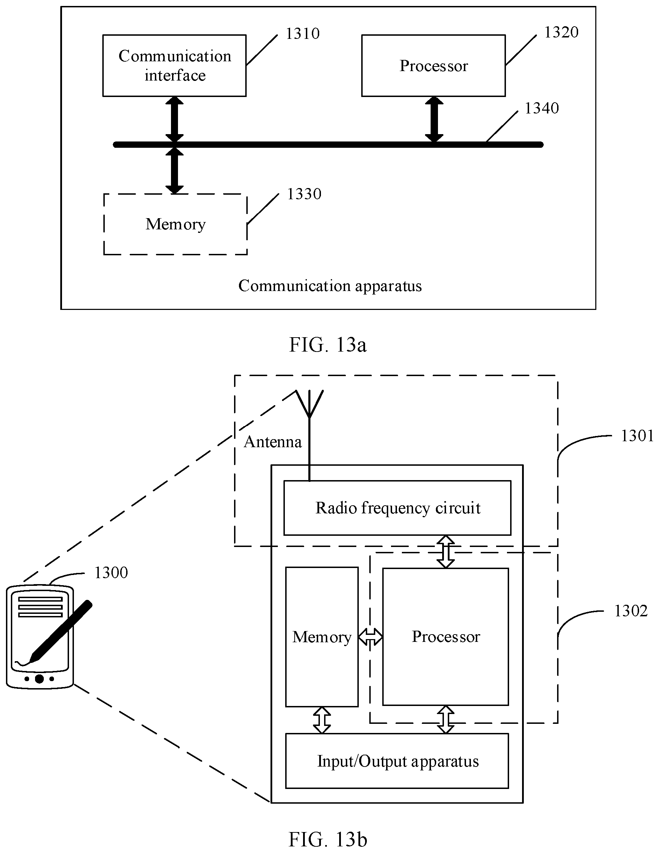

FIG. 13a shows a communication apparatus 130 according to an embodiment of this application. The communication apparatus 130 is configured to implement functions of the first terminal device, the second device, or the third communication device in the foregoing resource scheduling methods. The apparatus may be a first terminal device or an apparatus used in a first terminal device. The apparatus used in the first terminal device may be a chip system or a chip in the first terminal device. Alternatively, the communication apparatus may be a second device or an apparatus used in a second device. The apparatus used in the second device may be a chip system or a chip in the second device. Alternatively, the apparatus may be a third communication device or an apparatus used in a third communication device. The apparatus used in the third communication device may be a chip system or a chip in the third communication device. The chip system may include a chip, or may include a chip and another discrete component.

The communication apparatus 130 includes at least one processor 1320, configured to implement a data processing function of the first terminal device, the second device, or the third communication device in the methods provided in embodiments of this application. The apparatus 130 may further include a communication interface 1310, configured to implement receiving and sending operations of the first terminal device, the second device, or the third communication device in the methods provided in embodiments of this application. In embodiments of this application, the communication interface may be a transceiver, a circuit, a bus, a module, or a communication interface of another type, and is configured to communicate with another device by using a transmission medium. For example, the communication interface 1310 is used by an apparatus in the apparatus 130 to communicate with another device. The processor 1320 receives and sends data through the communication interface 1310, and is configured to implement the methods in the foregoing method embodiments.

The apparatus 130 may further include at least one memory 1330, configured to store program instructions and/or data. The memory 1330 is coupled to the processor 1320. The coupling in this embodiment of this application may be an indirect coupling or a communication connection between apparatuses, units, or modules in an electrical form, a mechanical form, or another form, and is used for information exchange between the apparatuses, the units, or the modules. The processor 1320 may operate in collaboration with the memory 1330. The processor 1320 may execute the program instructions stored in the memory 1330. At least one of the at least one memory may be included in the processor.

In this embodiment of this application, a specific connection medium between the communication interface 1310, the processor 1320, and the memory 1330 is not limited. In this embodiment of this application, the memory 1330, the processor 1320, and the communication interface 1310 are connected to each other through a bus 1340 in FIG. 13a. The bus is represented by using a bold line in FIG. 13a. A connection manner between other components is merely an example for description, and is not limited thereto. The bus may be classified into an address bus, a data bus, a control bus, and the like. For ease of representation, only one bold line is used to represent the bus in FIG. 13a, but this does not mean that there is only one bus or only one type of bus.

When the apparatus 130 is specifically an apparatus used in the first terminal device, the second device, or the third communication device, for example, when the apparatus 130 is specifically a chip or a chip system, the communication interface 1310 may output or receive a baseband signal. When the apparatus 130 is specifically the first terminal device, the second device, or the third communication device, the communication interface 1310 may output or receive a radio frequency signal. In embodiments of this application, the processor may be a general-purpose processor, a digital signal processor, an application-specific integrated circuit, a field-programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the methods disclosed with reference to embodiments of this application may be directly performed by a hardware processor, or may be performed by using a combination of hardware in the processor and a software module.

For example, FIG. 13b is a schematic diagram of a structure of another terminal device 1300 according to an embodiment of this application. The terminal device may perform operations performed by the first terminal device or the second device in the foregoing resource scheduling methods.

For ease of description, FIG. 13b shows only main components of the terminal device. As shown in FIG. 13b, a terminal device 1300 includes a processor, a memory, a radio frequency circuit, an antenna, and an input/output apparatus. The processor is mainly configured to: process a communication protocol and communication data, control the entire terminal device, execute a software program, and process data of the software program, for example, configured to support the terminal device in executing the procedures described in FIG. 3 to FIG. 11. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The terminal device 1300 may further include an input/output apparatus, for example, a touchscreen, a display screen, or a keyboard. The input/output apparatus is mainly configured to: receive data entered by a user, and output data to the user. It should be noted that some types of terminal devices may have no input/output apparatus.

After the terminal device is powered on, the processor may read the software program in a storage unit, interpret and execute the data of the software program, and process the data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 13b shows only one memory and one processor. In an actual terminal device, there may be a plurality of processors and memories. The memory may also be referred to as a storage medium, a storage device, or the like. This is not limited in embodiments of this application.

In an optional implementation, the processor may include a baseband processor and a central processing unit (central processing unit, CPU). The baseband processor is mainly configured to process a communication protocol and communication data. The CPU is mainly configured to control the entire terminal device, execute a software program, and process data of the software program. Optionally, the processor may alternatively be a network processor (network processor, NP) or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. The memory may include a volatile memory (volatile memory), for example, a random access memory (random access memory, RAM). The memory may alternatively include a non-volatile memory (non-volatile memory), for example, a flash memory (flash memory), a hard disk drive (hard disk drive, HDD), or a solid-state drive (solid-state drive, SSD). The memory may alternatively include a combination of the foregoing types of memories.

For example, in this embodiment of this application, as shown in FIG. 13b, the antenna and the radio frequency circuit that have sending and receiving functions may be considered as a communication unit 1301 of the terminal device 1300, and the processor having a processing function may be considered as a processing unit 1302 of the terminal device 1300.

The communication unit 1301 may also be referred to as a transceiver machine, a transceiver, a transceiver apparatus, a transceiver unit, or the like, and is configured to implement the sending and receiving functions. Optionally, a component that is in the communication unit 1301 and that is configured to implement the receiving function may be considered as a receiving unit, and a component that is in the communication unit 1301 and that is configured to implement the sending function may be considered as a sending unit. That is, the communication unit 1301 includes the receiving unit and the sending unit. For example, the receiving unit may also be referred to as a receiver, a receive machine, or a receiving circuit, and the sending unit may also be referred to as a transmitter, a transmit machine, or a transmitting circuit.

In some embodiments, the communication unit 1301 and the processing unit 1302 may be integrated into one component, or may be separated as different components. In addition, the processor and the memory may be integrated into one component, or may be separated as different components.

The communication unit 1301 may be configured to perform receiving and sending operations of the terminal device in the foregoing method embodiments. The processing unit 1302 may be configured to perform a data processing operation of the terminal device in the foregoing method embodiments.

An embodiment of this application further provides a computer-readable storage medium. The computer-readable storage medium stores computer-executable instructions. When the computer-executable instructions are executed, the method performed by the first terminal device in the foregoing method embodiments is implemented.

An embodiment of this application further provides a computer-readable storage medium. The computer-readable storage medium stores computer-executable instructions. When the computer-executable instructions are executed, the method performed by the second device in the foregoing method embodiments is implemented.

An embodiment of this application further provides a computer-readable storage medium. The computer-readable storage medium stores computer-executable instructions. When the computer-executable instructions are executed, the method performed by the third communication device in the foregoing method embodiments is implemented.

An embodiment of this application further provides a computer program product. The computer program product includes a computer program. When the computer program is executed, the method performed by the first terminal device in the foregoing method embodiments is implemented.

An embodiment of this application further provides a computer program product. The computer program product includes a computer program. When the computer program is executed, the method performed by the second device in the foregoing method embodiments is implemented.

An embodiment of this application further provides a computer program product. The computer program product includes a computer program. When the computer program is executed, the method performed by the third communication device in the foregoing method embodiments is implemented.

An embodiment of this application further provides a communication system. The communication system includes a first terminal device, a second device, and a third communication device. The first terminal device is configured to perform the method performed by the first terminal device in the foregoing method embodiments. The second device is configured to perform the method performed by the second device in the foregoing method embodiments. The third communication device is configured to perform the method performed by the third communication device in the foregoing method embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to example embodiments, and the related actions and modules are not necessarily mandatory to this application.

Cross reference may be made to descriptions of embodiments provided in this application, and the descriptions of embodiments have different focuses. For a part not described in detail in an embodiment, refer to related descriptions of another embodiment. For ease and brevity of description, for example, for functions and performed steps of the apparatuses and devices provided in embodiments of this application, refer to related descriptions of the method embodiments of this application. The method embodiments and the apparatus embodiments may also be referenced, combined, or cited to each other.

Finally, it should be noted that the foregoing embodiments are merely intended to describe the technical solutions of this application, other than limiting this application. Although this application is described in detail with reference to the foregoing embodiments, a person of ordinary skill in the art should understand that the technical solutions described in the foregoing embodiments may still be modified, or some or all of the technical features thereof may be equivalently replaced. These modifications or replacements do not make the essence of the corresponding technical solutions depart from the scope of the technical solutions of embodiments of this application.

## Claims

1. A resource scheduling method, wherein there is a sidelink between a first terminal device and a second device, there is a connection between the second device and a third communication device, and the method comprises:
sending**,** by the first terminal device, a mapping relationship between logical channels, LCHs, and/or quality of service information of a LCH to the second device, wherein the mapping relationship between the LCHs and/or the quality of service information of the LCH are/is used by the second device to determine a
first configuration message; receiving**,** by the first terminal device, the first configuration message sent by the second device;
determining, based on the first configuration message, to send indication information to the second device; and
sending the indication information to the second device, wherein the indication information comprises data volume information of to-be-transmitted data on the sidelink, the data volume information of the to-be-transmitted data is used by the second device to obtain a target resource, and the target resource is used by the second device to forward, to the third communication device, data received by the second device from the sidelink.

2. The method according to claim 1, wherein the first configuration message comprises one or more of a correspondence between a logical channel, LCH, and a logical channel group, LCG, an LCH identifier, a bearer identifier, an LCG identifier, a data volume threshold, and timer duration.

3. The method according to any one of claims 1 to 2, wherein the determining, based on the first configuration message, to send the indication information to the second device comprises:
determining that a trigger condition is met, wherein the trigger condition is associated with one or more of the LCH identifier, the LCG identifier, the bearer identifier, the data volume threshold, and the timer duration; and
sending the indication information to the second device.

4. The method according to any one of claims 1 to 3, wherein the indication information further comprises one or more of load status information of a physical channel on the sidelink, transmission time information corresponding to the to-be-transmitted data, and a delay budget corresponding to the to-be-transmitted data.

5. A resource scheduling method, wherein there is a sidelink between a first terminal device and a second device, there is a connection between the second device and a third communication device, and the method comprises:
receiving**,** by the second device, a mapping relationship between logical channels, LCHs and/or quality of service information of a LCH that are/is sent by the first terminal device;
determining a first configuration message based on the mapping relationship between the LCHs and/or transmission quality information of the LCH;
sending the first configuration message to the first terminal device, wherein the first configuration message is used by the first terminal device to determine to send indication information to the second device;
receiving the indication information sent by the first terminal device, wherein the indication information comprises data volume information of to-be-transmitted data on the sidelink; and
obtaining a target resource based on the data volume information of the to-be-transmitted data, wherein the target resource is used by the second device to forward, to the third communication device, data received by the second device from the sidelink.

6. The method according to claim 5, wherein before the receiving indication information sent by the first terminal device, the method further comprises:
receiving a second configuration message, wherein the second configuration message comprises one or more of a correspondence between a logical channel, LCH, and a logical channel group, LCG, an LCH identifier, a bearer identifier, an LCG identifier, a data volume threshold, and timer duration.

7. The method according to claim 6, wherein after the receiving a second configuration message, the method further comprises:
determining a first configuration message based on the second configuration message, wherein the first configuration message comprises one or more of the correspondence between the LCH and the LCG, the LCH identifier, the bearer identifier, the LCG identifier, the data volume threshold, and the timer duration; and
sending the first configuration message to the first terminal device, wherein the first configuration message is used by the first terminal device to determine to send the indication information to the second device.

8. The method according to claim 6 or 7, wherein the receiving a second configuration message comprises:
receiving the second configuration message sent by the third communication device.

9. The method according to any one of claims 5 to 8, wherein the obtaining a target resource based on the data volume information of the to-be-transmitted data comprises:
sending a pre-emptive buffer status report to the third communication device based on the data volume information of the to-be-transmitted data, wherein the pre-emptive buffer status report comprises the data volume information of the to-be-transmitted data, the data volume information of the to-be-transmitted data is used by the third communication device to allocate a target resource to the second device, and the target resource is used to forward, to the third communication device, the data received by the second device from the sidelink.

10. A communication apparatus, comprising a processor and a communication interface, wherein
the communication interface is configured to receive or send a signal; and
the processor is configured to perform the method according to any one of claims 1 to 4 or any one of claims 5 to 9.

11. A computer-readable storage medium, wherein the computer-readable storage medium is configured to store computer-executable instructions; and when the computer-executable instructions are executed, the method according to any one of claims 1 to 4 is implemented; or when the computer-executable instructions are executed, the method according to any one of claims 5 to 9 is implemented.

## Patentansprüche

1. Ressourcenplanungsverfahren, wobei zwischen einem ersten Endgerät und einem zweiten Gerät ein Sidelink besteht, zwischen dem zweiten Gerät und einem dritten Kommunikationsgerät eine Verbindung besteht und das Verfahren Folgendes umfasst:
Senden, durch das erste Endgerät, einer Zuordnungsbeziehung zwischen logischen Kanälen, LCHs, und/oder von Dienstgüteinformationen eines LCH an das zweite Gerät, wobei die Zuordnungsbeziehung zwischen den LCHs und/oder die Dienstgüteinformationen des LCH von dem zweiten Gerät verwendet wird/werden, um eine erste Konfigurationsnachricht zu bestimmen;
Empfangen, durch das erste Endgerät, der durch das zweite Gerät gesendeten ersten Konfigurationsnachricht;
Bestimmen, basierend auf der ersten Konfigurationsnachricht, Angabeinformationen an das zweite Gerät zu senden; und
Senden der Angabeinformationen an das zweite Gerät, wobei die Angabeinformationen Datenvolumeninformationen von auf dem Sidelink zu übertragenden Daten umfassen, die Datenvolumeninformationen der zu übertragenden Daten von dem zweiten Gerät verwendet werden, um eine Zielressource zu erlangen, und die Zielressource von dem zweiten Gerät verwendet wird, um Daten, die durch das zweite Gerät von dem Sidelink empfangen werden, an das dritte Kommunikationsgerät weiterzuleiten.

2. Verfahren nach Anspruch 1, wobei die erste Konfigurationsnachricht eines oder mehrere von einer Entsprechung zwischen einem logischen Kanal, LCH, und einer Gruppe logischer Kanäle, LCG, einer LCH-Kennung, einer Trägerkennung, einer LCG-Kennung, einem Datenvolumenschwellenwert und einer Zeitgeberdauer umfasst.

3. Verfahren nach einem der Ansprüche 1 bis 2, wobei das Bestimmen, basierend auf der ersten Dienstkonfigurationsnachricht, die Angabeinformationen an das zweite Gerät zu senden, Folgendes umfasst:
Bestimmen, dass eine Auslösebedingung erfüllt ist, wobei die Auslösebedingung einem oder mehreren der LCH-Kennung, der LCG-Kennung, der Trägerkennung, des Datenvolumenschwellenwerts und der Zeitgeberdauer zugeordnet ist; und
Senden der Angabeinformationen an das zweite Gerät.

4. Verfahren nach einem der Ansprüche 1 bis 3, wobei die Angabeinformationen ferner eines oder mehrere von Laststatusinformationen eines physischen Kanals auf dem Sidelink, Übertragungszeitinformationen, die den zu übertragenden Daten entsprechen, und einem Verzögerungsbudget, das den zu übertragenden Daten entspricht, umfassen.

5. Ressourcenplanungsverfahren, wobei zwischen einem ersten Endgerät und einem zweiten Gerät ein Sidelink besteht, zwischen dem zweiten Gerät und einem dritten Kommunikationsgerät eine Verbindung besteht und das Verfahren Folgendes umfasst:
Empfangen, durch das zweite Gerät, einer Zuordnungsbeziehung zwischen logischen Kanälen, LCHs, und/oder von Dienstgüteinformationen eines LCH, die durch das erste Endgerät gesendet wird/werden;
Bestimmen einer ersten Konfigurationsnachricht basierend auf der Zuordnungsbeziehung zwischen den LCHs und/oder den Übertragungsqualitätsinformationen des LCH;
Senden der ersten Konfigurationsnachricht an das erste Endgerät, wobei die erste Konfigurationsnachricht von dem ersten Endgerät verwendet wird, um zu bestimmen, Angabeinformationen an das zweite Gerät zu senden;
Empfangen der durch das erste Endgerät gesendeten Angabeinformationen, wobei die Angabeinformationen Datenvolumeninformationen von auf dem Sidelink zu übertragenden Daten umfassen; und
Erlangen einer Zielressource basierend auf den Datenvolumeninformationen der zu übertragenden Daten, wobei die Zielressource von dem zweiten Gerät verwendet wird, um Daten, die durch das zweite Gerät von dem Sidelink empfangen werden, an das dritte Kommunikationsgerät weiterzuleiten.

6. Verfahren nach Anspruch 5, wobei das Verfahren vor dem Empfangen von Angabeinformationen, die durch das erste Endgerät gesendet werden, ferner Folgendes umfasst:
Empfangen einer zweiten Konfigurationsnachricht, wobei die zweite Konfigurationsnachricht eines oder mehrere von einer Entsprechung zwischen einem logischen Kanal, LCH, und einer Gruppe logischer Kanäle, LCG, einer LCH-Kennung, einer Trägerkennung, einer LCG-Kennung, einem Datenvolumenschwellenwert und einer Zeitgeberdauer umfasst.

7. Verfahren nach Anspruch 6, wobei das Verfahren nach dem Empfangen einer zweiten Konfigurationsnachricht ferner Folgendes umfasst:
Bestimmen einer ersten Konfigurationsnachricht basierend auf der zweiten Konfigurationsnachricht, wobei die erste Konfigurationsnachricht eines oder mehrere der Entsprechung zwischen dem LCH und dem LCG, der LCH-Kennung, der Trägerkennung, der LCG-Kennung, dem Datenvolumenschwellenwert und der Zeitgeberdauer umfasst; und
Senden der ersten Konfigurationsnachricht an das erste Endgerät, wobei die erste Konfigurationsnachricht von dem ersten Endgerät verwendet wird, um zu bestimmen, die Angabeinformationen an das zweite Gerät zu senden.

8. Verfahren nach Anspruch 6 oder 7, wobei das Empfangen einer zweiten Konfigurationsnachricht Folgendes umfasst:
Empfangen der zweiten Konfigurationsnachricht, die durch das dritte Kommunikationsgerät gesendet wird.

9. Verfahren nach einem der Ansprüche 5 bis 8, wobei das Erlangen einer Zielressource basierend auf den Datenvolumeninformationen der zu übertragenden Daten Folgendes umfasst:
Senden eines präemptiven Pufferstatusberichts an das dritte Kommunikationsgerät basierend auf den Datenvolumeninformationen der zu übertragenden Daten, wobei der präemptive Pufferstatusbericht die Datenvolumeninformationen der zu übertragenden Daten umfasst, die Datenvolumeninformationen der zu übertragenden Daten von dem dritten Kommunikationsgerät verwendet werden, um dem zweiten Gerät eine Zielressource zuzuweisen, und die Zielressource verwendet wird, um die durch das zweite Gerät über den Sidelink empfangenen Daten an das dritte Kommunikationsgerät weiterzuleiten.

10. Kommunikationsvorrichtung, umfassend einen Prozessor und eine Kommunikationsschnittstelle, wobei
die Kommunikationsschnittstelle dazu konfiguriert ist, ein Signal zu empfangen oder zu senden; und
der Prozessor dazu konfiguriert ist, das Verfahren nach einem der Ansprüche 1 bis 4 oder nach einem der Ansprüche 5 bis 9 durchzuführen.

11. Computerlesbares Speichermedium, wobei das computerlesbare Speichermedium dazu konfiguriert ist, computerausführbare Anweisungen zu speichern; und, wenn die computerausführbaren Anweisungen ausgeführt werden, das Verfahren nach einem der Ansprüche 1 bis 4 umgesetzt wird; oder, wenn die computerausführbaren Anweisungen ausgeführt werden, das Verfahren nach einem der Ansprüche 5 bis 9 umgesetzt wird.

## Revendications

1. Procédé de planification de ressources, dans lequel il existe une liaison latérale entre un premier dispositif terminal et un second dispositif, il existe une connexion entre le second dispositif et un troisième dispositif de communication, et le procédé comprend :
l'envoi, par le premier dispositif terminal, d'une relation de mappage entre les canaux logiques, LCH, et/ou des informations de qualité de service d'un LCH au second dispositif, dans lequel la relation de mappage entre les LCH et/ou les informations de qualité de service du LCH sont/est utilisée(s) par le second dispositif pour déterminer un premier message de configuration ;
la réception, par le premier dispositif terminal, du premier message de configuration envoyé par le second dispositif ;
la détermination, sur la base du premier message de configuration, de l'envoi d'informations d'indication au second dispositif ; et
l'envoi des informations d'indication au second dispositif, dans lequel les informations d'indication comprennent des informations de volume de données de données à transmettre sur la liaison latérale, les informations de volume de données des données à transmettre sont utilisées par le second dispositif pour obtenir une ressource cible, et la ressource cible est utilisée par le second dispositif pour transmettre, au troisième dispositif de communication, des données reçues par le second dispositif à partir de la liaison latérale.

2. Procédé selon la revendication 1, dans lequel le premier message de configuration comprend un ou plusieurs éléments parmi une correspondance entre un canal logique, LCH, et un groupe de canaux logiques, LCG, un identifiant LCH, un identifiant de support, un identifiant LCG, un seuil de volume de données, et une durée de temporisation.

3. Procédé selon l'une quelconque des revendications 1 et 2, dans lequel la détermination, sur la base du premier message de configuration, de l'envoi des informations d'indication au second dispositif comprend :
la détermination qu'une condition de déclenchement est remplie, dans lequel la condition de déclenchement est associée à un ou plusieurs des identifiants LCH, des identifiants LCG, de l'identifiant de support, du seuil de volume de données, et de la durée de temporisation ; et
l'envoi des informations d'indication au second dispositif.

4. Procédé selon l'une quelconque des revendications 1 à 3, dans lequel les informations d'indication comprennent également un ou plusieurs parmi des informations d'état de charge d'un canal physique sur la liaison latérale, des informations de temps de transmission correspondant aux données à transmettre, et un budget de retard correspondant aux données à transmettre.

5. Procédé de planification de ressources, dans lequel il existe une liaison latérale entre un premier dispositif terminal et un second dispositif, il existe une connexion entre le second dispositif et un troisième dispositif de communication, et le procédé comprend :
la réception, par le second dispositif, d'une relation de mappage entre des canaux logiques, LCH, et/ou des informations de qualité de service d'un LCH qui sont/est envoyé(s) par le premier dispositif terminal ;
la détermination d'un premier message de configuration sur la base de la relation de mappage entre les LCH et/ou des informations de qualité de transmission du LCH ;
l'envoi du premier message de configuration au premier dispositif terminal, dans lequel le premier message de configuration est utilisé par le premier dispositif terminal pour déterminer l'envoi d'informations d'indication au second dispositif ;
la réception des informations d'indication envoyées par le premier dispositif terminal, dans lequel les informations d'indication comprennent des informations de volume de données de données à transmettre sur la liaison latérale ; et
l'obtention d'une ressource cible sur la base des informations de volume de données des données à transmettre, dans lequel la ressource cible est utilisée par le second dispositif pour transmettre, au troisième dispositif de communication, des données reçues par le second dispositif à partir de la liaison latérale.

6. Procédé selon la revendication 5, dans lequel avant la réception d'informations d'indication envoyées par le premier dispositif terminal, le procédé comprend également :
la réception d'un second message de configuration, dans lequel le second message de configuration comprend un ou plusieurs éléments parmi une correspondance entre un canal logique, LCH, et un groupe de canaux logiques, LCG, un identifiant LCH, un identifiant de support, un identifiant LCG, un seuil de volume de données, et une durée de temporisation.

7. Procédé selon la revendication 6, dans lequel après la réception d'un second message de configuration, le procédé comprend également :
la détermination d'un premier message de configuration sur la base du second message de configuration, dans lequel le premier message de configuration comprend une ou plusieurs correspondances entre le LCH et le LCG, l'identifiant LCH, l'identifiant du support, l'identifiant LCG, le seuil de volume de données, et la durée de temporisation ; et
l'envoi du premier message de configuration au premier dispositif terminal, dans lequel le premier message de configuration est utilisé par le premier dispositif terminal pour déterminer l'envoi des informations d'indication au second dispositif.

8. Procédé selon la revendication 6 ou 7, dans lequel la réception d'un second message de configuration comprend :
la réception du second message de configuration envoyé par le troisième dispositif de communication.

9. Procédé selon l'une quelconque des revendications 5 à 8, dans lequel l'obtention d'une ressource cible sur la base des informations de volume de données des données à transmettre comprend :
l'envoi d'un rapport d'état de tampon préemptif au troisième dispositif de communication sur la base des informations de volume de données des données à transmettre, dans lequel le rapport d'état de tampon préemptif comprend les informations de volume de données des données à transmettre, les informations de volume de données des données à transmettre sont utilisées par le troisième dispositif de communication pour allouer une ressource cible au second dispositif, et la ressource cible est utilisée pour transmettre, au troisième dispositif de communication, les données reçues par le second dispositif à partir de la liaison latérale.

10. Appareil de communication, comprenant un processeur et une interface de communication, dans lequel
l'interface de communication est configurée pour recevoir ou envoyer un signal ; et
le processeur est configuré pour réaliser le procédé selon l'une quelconque des revendications 1 à 4 ou selon l'une quelconque des revendications 5 à 9.

11. Support de stockage lisible par ordinateur, dans lequel le support de stockage lisible par ordinateur est configuré pour stocker des instructions exécutables par ordinateur ; et lorsque les instructions exécutables par ordinateur sont exécutées, le procédé selon l'une quelconque des revendications 1 à 4 est mis en œuvre ; ou lorsque les instructions exécutables par ordinateur sont exécutées, le procédé selon l'une quelconque des revendications 5 à 9 est mis en œuvre.
